Europäisches Patentamt

European Patent Office

Office européen des brevets

(19)

(11) Numéro de publication: **0 243 252**
**B1**

(12) **FASCICULE DE BREVET EUROPEEN**

(45) Date de publication du fascicule du brevet: **27.06.90**

(21) Numéro de dépôt: **87400876.6**

(22) Date de dépôt: **16.04.87**

(51) Int. Cl.⁵: **B 60 Q 1/14,** H 01 H 13/60, H 01 H 3/50

(54) **Commutateur bi-stable en particulier pour la commande de l'éclairage code/phare d'un véhicule automobile.**

(30) Priorité: **18.04.86 FR 8605604**
**03.06.86 FR 8607963**
**03.12.86 FR 8616924**
**03.12.86 FR 8616925**

(43) Date de publication de la demande:
**28.10.87 Bulletin 87/44**

(45) Mention de la délivrance du brevet:
**27.06.90 Bulletin 90/26**

(84) Etats contractants désignés:
**DE ES FR GB IT**

(56) Documents cités:
**FR-A-2 354 626**
**US-A-4 300 026**

(73) Titulaire: **JAEGER**
**2, rue Baudin**
**F-92303 Levallois-Perret (FR)**

(72) Inventeur: **Chretien, Louis Jacques**
**65, rue du Grillon**
**F-95610 Eragny S/Oise (FR)**

(74) Mandataire: **Martin, Jean-Jacques et al**
**Cabinet REGIMBEAU 26, Avenue Kléber**
**F-75116 Paris (FR)**

**Description**

La présente invention concerne le domaine des commutateurs pour véhicule automobile et plus précisément un commutateur bi-stable, en particulier pour la commande de l'éclairage code/phare d'un véhicule automobile.

La présente invention concerne plus précisément un commutateur du type connu en soi comprenant:

un boîtier qui loge:

un coulisseau de commande guidé à translation entre une position de repos et une position de travail,

une platte s'étendant dans la direction de déplacement du coulisseau, portée sur le coulisseau de commande de manière à pouvoir pivote par rapport à celui-ci autour d'un axe transversal à la direction de translation du coulisseau, et

un tiroir de contact susceptible de déplacement dans une direction générale perpendiculaire à la direction de déplacement du coulisseau et à l'axe de pivotement de la palette, muni

d'au moins un plot de contact.

Un tel commutateur est connu par exemple du document US—A—4300026. Ce document décrit en effet un commutateur comprenant

un boîtier,

un coulisseau de commande, guidé à translation dans le boîtier pour être déplacé manuellement entre une position de repos et une position de travail, le coulisseau de commande étant sollicité élastiquement vers la position de repos et comportant une chambre ouverte au niveau de son extrémité interne au boîtier,

une palette s'étendant généralement dans la direction de déplacement du coulisseau étant portée dans la chambre interne de celui-ci de manière à pouvoir pivoter par rapport au coulisseau autour d'un axe transversal à la direction de translation du coulisseau,

un organe d'actionnement porté à pivotement sur le boîtier en regard de la palette, pour être entraîné par celle-ci, et

un tiroir de contact susceptible de déplacement dans une direction générale perpendiculaire à la direction de déplacement du coulisseau et à l'axe de pivotement de la manette, le tiroir de contact présentant un évidement dans lequel est engagé un doigt d'entraînement solidaire du tiroir, et au moins un plot de contact porté par le tiroir.

Lorsque le coulisseau de commande est entraîné, la palette est portée au contact de l'organe d'actionnement, celui-ci pivote et déplace le tiroir de contact.

Un premier but de la présente invention est de proposer un commutateur bi-stable de réalisation simple, économique et fiable, qui permette par commandes successives d'un levier unique, de préférence entraîné selon un mouvement basculant, d'assurer automatiquement une commutation entre la position code et la position phare de l'éclairage d'un véhicule automobile.

Un autre but de la présente invention est de proposer un commutateur bi-stable pour la commande de l'éclairage code/phare d'un véhicule automobile adapté pour assurer automatiquement le retour à la position d'éclairage code du commutateur lorsque les moyens de contrôle de l'éclairage du véhicule automobile sont portés en position éclairage ville.

Un autre but de la présente invention est de proposer un commutateur bi-stable qui présente un faible niveau de bruit en cours de fonctionnement.

Un autre but de la présente invention est de proposer un commutateur bi-stable qui autorise l'établissement de courant de puissance.

Ces différents buts sont atteints selon la présente invention grâce à un commutateur bi-stable, en particulier pour la commande de l'éclairage code/phare d'un véhicule automobile du type indiqué précédemment comprenant:

un boîtier qui loge:

un coulisseau de commande guidé à translation entre une position de repos et une position de travail,

une palette s'étendant dans la direction de déplacement du coulisseau, portée sur le coulisseau de commande de manière à pouvoir pivoter par rapport à celui-ci autour d'un axe transversal à la direction de translation du coulisseau, et

un tiroir de contact susceptible de déplacement dans une direction générale perpendiculaire à la direction de déplacement du coulisseau et à l'axe de pivotement de la palette, muni

d'au moins un plot de contact, caractérisé par le fait qu'il est prévu:

deux rampes ménagées sur une face commune du tiroir en regard de la palette, telles que lesdites rampes soient placées alternativement en regard de la palette selon la position du tirior dans le boîtier.

Selon l'invention le tiroir de contact est avantageusement porté à déplacement entre deux positions et sollicité élastiquement vers une position de repos correspondant de préférence à la position éclairage code.

Des moyens sont de préférence prévus pour verrouiller le tiroir de contact dans sa seconde position.

Selon une variante de ces moyens de verrouillage, le tiroir de contact porte un téton en saillie perpendiculairement à sa direction de déplacement, pénétrant, dans une lumière ménagée dans le boîtier ou un élément lié à celui-ci, qui comporte au moins un segment de verrouillage s'étendant parallèlement à la direction de déplacement du coulisseau.

Le commutateur bi-stable conforme à la présente invention comporte alors de plus de préférence un élément de déverrouillage du tiroir de contact apte à recouvrir le segment de la lumière, qui s'étend parallèlement à la direction de déplacement du coulisseau pour induire un retour du tiroir de contact vers sa position de repos.

Selon la présente invention l'élément de déverrouillage peut être fixe pour interdire le verrouillage du tiroir de contact dans la position éclairage phare. Dans ce cas, cette dernière position est une position instable. Néanmoins, selon une autre caractéristique de la présente invention, l'élément de déverrouillage peut être mobile et commandé à déplacement entre une position dans laquelle il recouvre le segment de la lumière, qui s'étend parallèlement à la direction de déplacement du coulisseau et une position dans laquelle il ne recouvre pas ce segment. L'élément de déverrouillage peut être utilisé par exemple pour assurer un retour automatique du commutateur bistable en position code lorsque les moyens de commande de l'éclairage du véhicule automobile sont portés en position éclairage ville. Cette disposition sera décrite plus en détail par la suite.

Selon une autre caractéristique avantageuse de la présente invention la palette est sollicitée élastiquement vers une position de repos dans laquelle la palette s'étend parallèlement à la direction de translation du coulisseau.

Il est également avantageux que le coulisseau de commande soit sollicité élastiquement vers la position de repos éloignée du tiroir de contact.

Selon une caractéristique préférentielle de la présente invention, sur sa surface opposée au coulisseau de commande, le tiroir de contact possède deux zones d'appui contre le boîtier ou un élément lié à celui-ci dont un plot de contact.

Selon encore une autre caractéristique avantageuse de la présente invention, la course du tiroir de contact et la position des rampes sur le tiroir sont telles que selon la position du tiroir dans le boîtier les génératrices passant par l'axe de pivotement de la palette et respectivement l'un ou l'autre des fonds des rampes contre lesquels vient en appui l'extrémité de la palette passent respectivement de part et d'autre d'un point d'appui du tiroir de contact contre le boîtier ou un élément lié à celui-ci au niveau d'une face du tiroir opposée au coulisseau. Cette disposition qui sera explicitée plus en détail par la suite permet notamment d'induire un pivotement du tiroir de contact selon deux sens opposés pour alternativement solliciter le verrouillage et le déverrouillage du tiroir. Dans un sens sollicitant le tiroir en verrouillage dans la position d'éclairage phare le téton de verrouillage est sollicité dans le segment de la lumière s'étendant parallèlement à la direction de déplacement du coulisseau. Par contre, dans l'autre sens de pivotement du tiroir de contact, le téton est sollicité vers l'extérieur du segment de la lumière s'étendant parallèlement à la direction de déplacement du coulisseau pour permettre un retour un tiroir en position de repos, c'est-à-dire la position d'éclairage code du véhicule automobile.

Selon une autre caractéristique préférentielle de la présente invention un organe élastique sollicite le téton vers le segment de verrouillage s'étendant parallèlement à la direction de déplacement du coulisseau, cet organe élastique étant avantageusement formé par un ressort coopérant avec le plot de contact porté par le tiroir.

La présente invention a également pour but de proposer en variante des moyens de verrouillage du tiroir de contact en seconde position, autorisant d'une part à l'aide d'une commande à distance, une réinitialisation du tiroir de contact en position de repos, et autorisant d'autre par un verrouillage sélectif du tiroir de contact en seconde position, c'est-à-dire autorisant à volonté de verrouiller ou de ne pas verrouiller le tiroir de contact dans la seconde position, lorsque celle-ci est atteinte.

Ces différents buts sont atteints grâce à des moyens sollicitant élastiquement le tiroir vers une première position et à des moyens de verrouillage à commande électromagnétique aptes à maintenir sélectivement le tiroir dans la seconde position lorsqu'il est déplacé dans celle-ci par la palette associée au coulisseau.

Cette disposition permet par exemple, lorsque le plot de contact porté par le tiroir de contact est utilisé pour assurer une commutation code/phare des feux d'un véhicule automobile, d'assurer une réinitialisation automatique en position code, du commutateur bi-stable, lorsqu'un commutateur auxiliaire contrôlant la commande électromagnétique des moyens de verrouillage est placé dans une position prédéterminée correspondant à une commande en position feux de ville.

Selon une caractéristique avantageuse de l'invention, les moyens de verrouillage comprennent une bobine électrique alimentée sélectivement par un commutateur auxiliaire associé, et un chariot portant un organe de verrouillage et déplaçable par le tiroir entre une position de repos correspondant à la première position du tiroir et une position de verrouillage correspondant à la seconde position du tiroir, le chariot étant maintenu en position de verrouillage lorsque la bobine est alimentée. De façon préférentielle, ces moyens de verrouillage comprennent deux organes de verrouillage formés respectivement d'un téton s'étendant perpendiculairement à la direction de déplacement du tiroir de contact et une lumière recevant le téton, qui comporte au moins un segment de verrouillage parallèle à la direction de déplacement du coulisseau, l'un des organes de verrouillage étant prévu sur le tiroir de contact tandis que l'autre organe de verrouillage est prévu sur le chariot.

Selon un mode de réalisation considéré actuellement comme préférentiel, le téton est solidaire du tiroir de contact, tandis que la lumière est ménagée dans le chariot.

De façon avantageuse le tiroir de contact et le chariot sont guidés à translation parallèlement.

Un autre but de l'invention est de limiter le bruit de fonctionnement du commutateur lors du déplacement du tiroir de contact. Pour cela de préférence selon la présente invention, le tiroir de contact est susceptible de déplacement entre deux positions, des moyens sollicitent élastiquement le tiroir vers une première position et, le boîtier comprend une structure de guidage conformée de telle sorte que lorsque le tiroir est déplacé vers la première position il contacte la structure de guidage selon une incidence non normale.

De préférence, la structure de guidage précitée comprend une surface cylindrique servant d'appui et de guidage au tiroir lorsque celui-ci est déplacé vers la première position.

Un autre but de l'invention est de proposer des moyens perfectionnés adaptés pour réaliser un appel phare lorsque le coulisseau de commande est déplacé de sa position de repos vers sa position de travail. Avantageusement, ces moyens comprennent une lamelle électriquement conductrice supportée par le coulisseau de commande et un ressort intercalé entre la lamelle et le coulisseau de telle sorte que lorsque le coulisseau est déplacé vers sa position de travail il sollicite la lamelle en appui contre un plot électriquement conducteur porté par le boîtier, avec une force constante déterminée par le ressort.

Selon une autre caractéristique avantageuse de l'invention, il est prévu des moyens de verrouillage sélectif du tiroir de contact en seconde position, c'est-à-dire autorisant à volonté de verrouiller ou de ne pas verrouiller le tiroir de contact dans la seconde position, lorsque celle-ci est atteinte, qui comprennent des moyens sollicitant élastiquement le tiroir vers une première position et des moyens de verrouillage à commande électromagnétique pour maintenir sélectivement le tiroir dans la seconde position lorsqu'il est déplacé dans celle-ci par la palette associée au coulisseau, les moyens de verrouillage comprenant une bobine électrique alimentée sélectivement par un commutateur auxiliaire associé, un chariot portant un premier organe de verrouillage coopérant avec un second organe de verrouillage prévu sur le tiroir de contact, déplaçable par le tiroir parallèlement au déplacement de celui-ci, entre une position de repos correspondant à la première position du tiroir et une position de verrouillage correspondant à la seconde position du tiroir, le charoit étant maintenu en position de verrouillage lorsque la bobine est alimentée, et une rampe contrôlant un déplacement relatif du tiroir de contact et du chariot perpendiculairement à la direction de déplacement du tiroir de contact, lorsque le tiroir est déplacé de la première position vers la seconde position pour porter en prise les organes de verrouillage prévus sur le tiroir de contact et le chariot.

D'autres caractéristiques, buts et avantages de la présente invention apparaîtront à la lecture de la description détaillée qui va suivre et en regard des dessins annexés donnés à titre d'exemples non limitatifs et sur lesquels:

la figure 1 représente une vue schématique en coupe d'un commutateur bi-stable conforme à un premier mode de réalisation de la présente invention selon des plans de coupe non coplanaires référencés I—I sur la figure 2; pour l'essentiel la vue en coupe de la figure 1 s'étend parallèlement à la direction de translation du coulisseau de commande et perpendiculairement à la direction de translation du tiroir de contact,

la figure 2 représente une autre vue en coupe du même commutateur bi-stable conforme à la présente invention selon un plan de coupe référencé II—II sur la figure 1; le plan de coupe de la figure 2 s'étend parallèlement à la direction de coulissement du coulisseau de commande et parallèlement à la direction de translation du tiroir de contact,

la figure 3 représente une autre vue en coupe du même commutateur bi-stable conforme à la présente invention selon des plans de coupe non coplanaires référencés III—III sur la figure 1,

les figures 4, 5, 6, 7 et 8 représentent schématiquement différentes étapes du fonctionnement du commutateur bi-stable conforme à la présente invention,

les figures 9 à 16 illustrent une variante de réalisation des moyens de verrouillage associés au tiroir de contact, plus précisement:

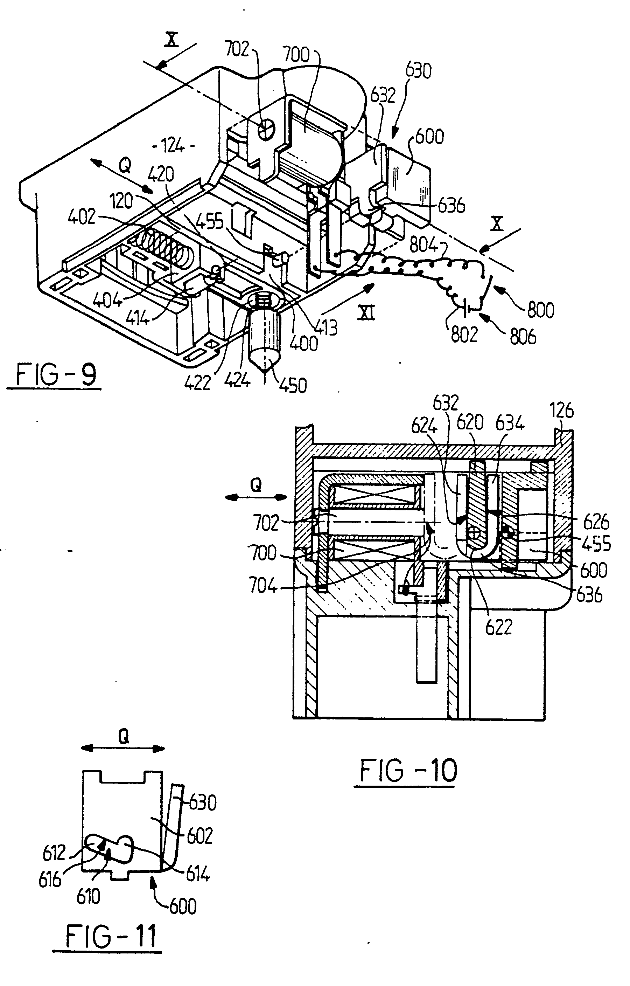

la figure 9 représente une vue schématique en perspective de ces moyens de verrouillage,

la figure 10 représente une vue schématique en coupe de ces moyens de verrouillage selon un plan de coupe longitudinal référence X—X sur la figure 9,

la figure 11 représente une vue latérale de la face du chariot dirigée vers le tiroir de contact, selon une vue référencée XI sur la figure 9,

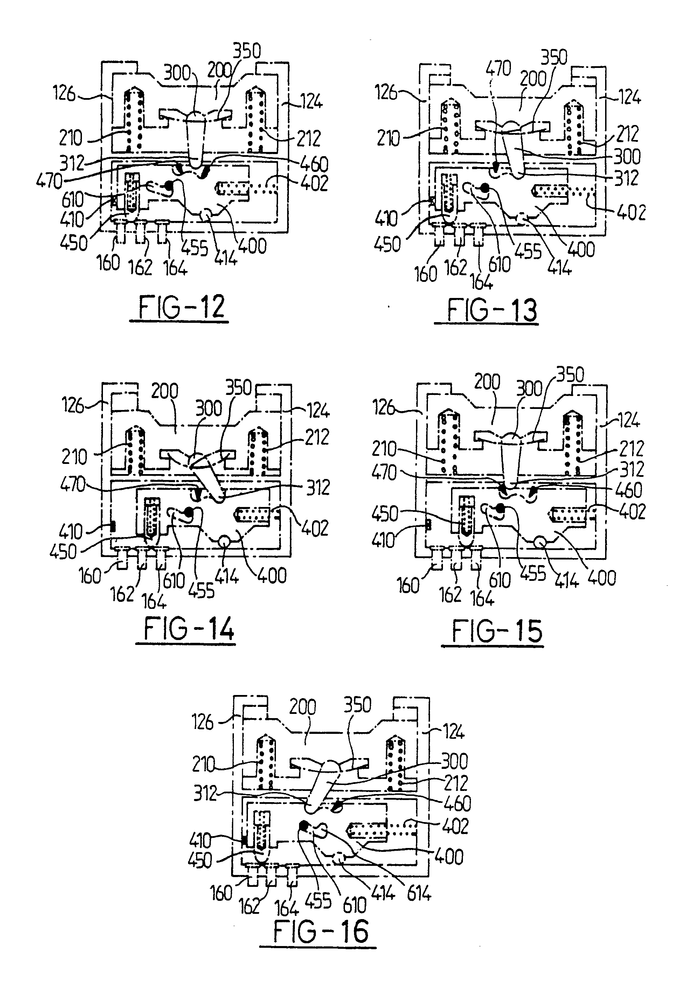

les figures 12, 13, 14, 15 et 16 représentant schématiquement différentes étapes du fonctionnement du commutateur bi-stable intégrant ces moyens de verrouillage,

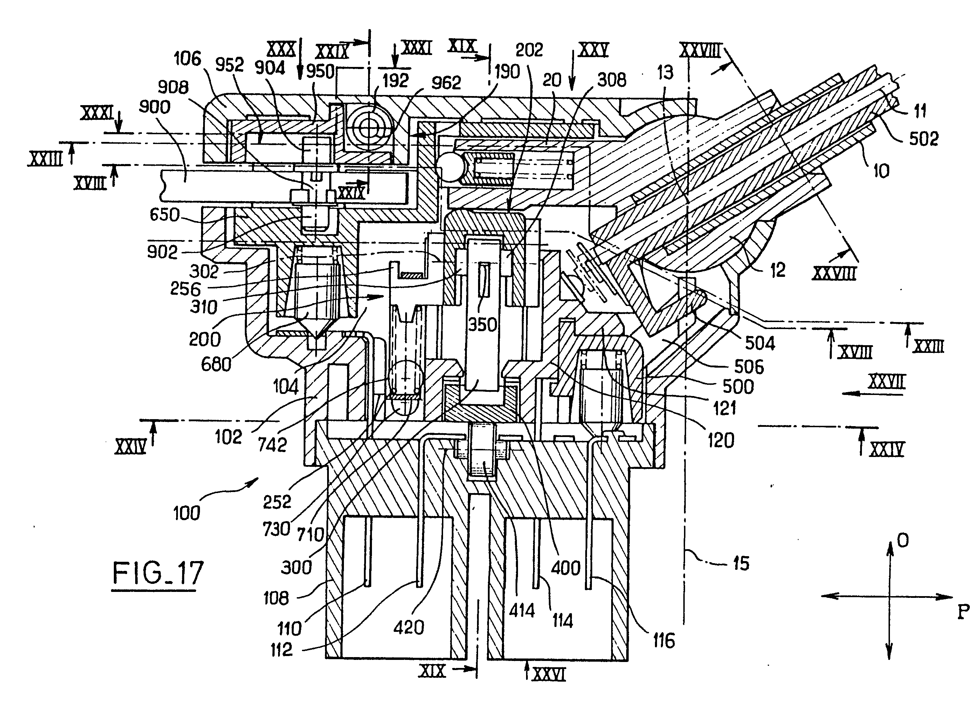

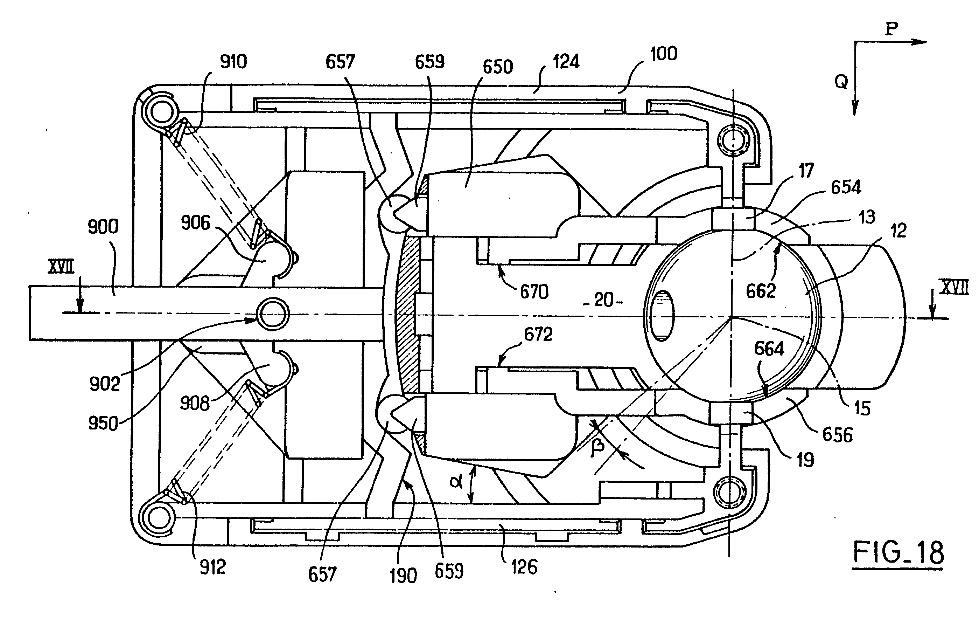

la figure 17 représente une vue schématique en coupe longitudinale d'un commutateur conforme à un second mode de réalisation de la présente invention selon un plan de coupe illustré schématiquement sous la référence XVII—XVII sur la figure 18,

la figure 18 représente une vue du même commutateur selon des plans de coupe non coplanaires illustrés sous la référence XVIII—XVIII sur la figure 17,

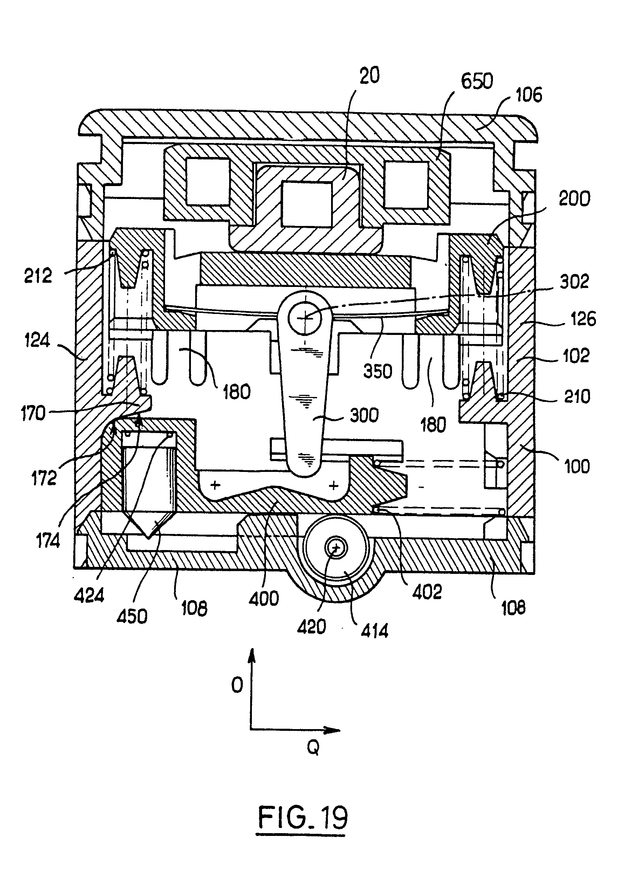

la figure 19 représente une vue en coupe transversale du même commutateur selon un plan de coupe référencé XIX—XIX sur la figure 17, qui est orthogonal au plan de coupe longitudinal XVII—XVII de la figure 17,

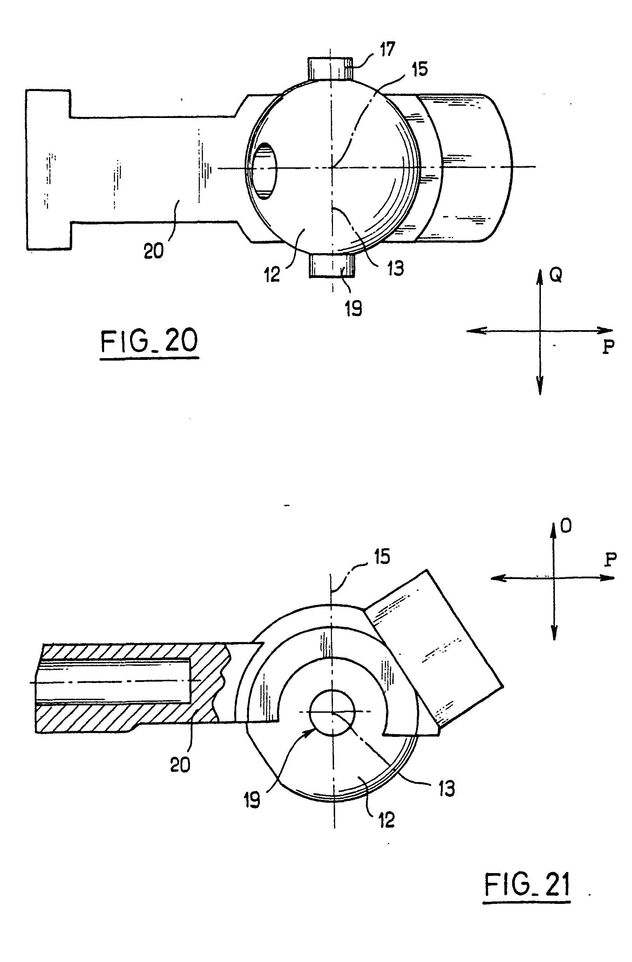

la figure 20 représente une vue de dessous de la rotule de ce commutateur électrique selon une vue similaire à la figure 18,

la figure 21 représente une vue latérale partiellement en coupe de la même rotule selon une vue similaire au plan de coupe de la figure 17,

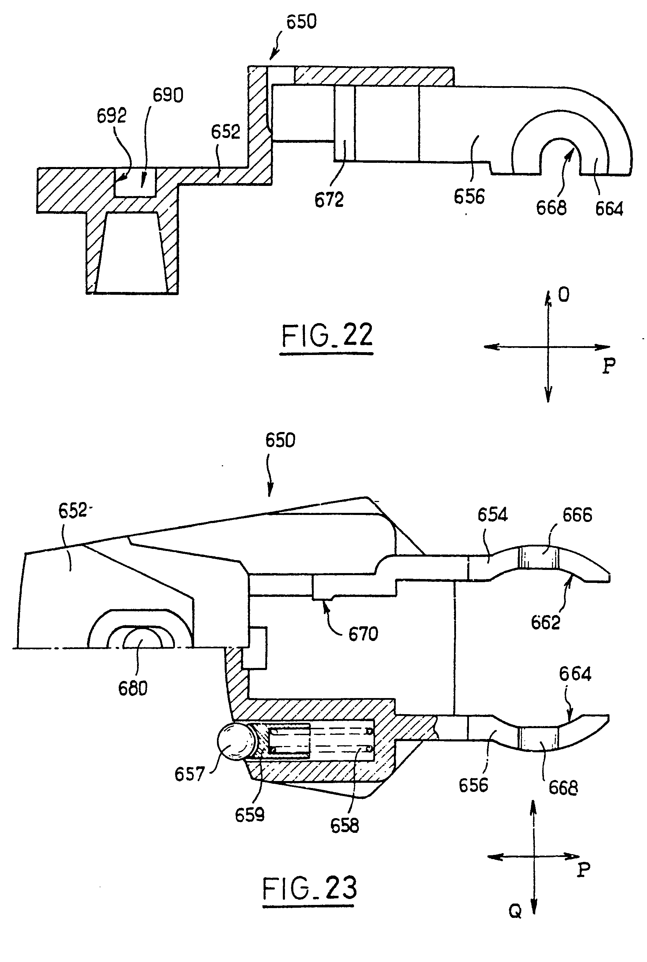

la figure 22 représente une vue de la chape du même commutateur électrique selon un plan de coupe similaire à celui de la figure 17,

la figure 23 représente la chape du même commutateur électrique, plus précisément la demi-vue supérieure de la figure 23 représente une vue de dessous de la chape similaire à la figure 18, tandis que la demi-vue inférieure de la figure 23 représente la chape selon des plans de coupe non coplanaires illustrés sous la référence XXIII—XXIII sur la figure 17,

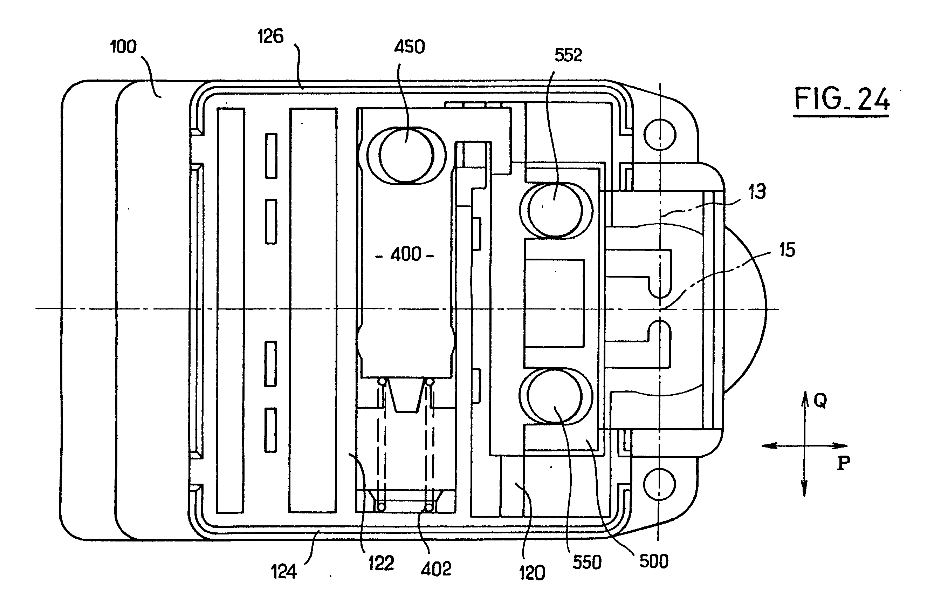

la figure 24 représente une vue en coupe du même commutateur électrique selon un plan de coupe illustré sous la référence XXIV—XXIV sur la figure 17,

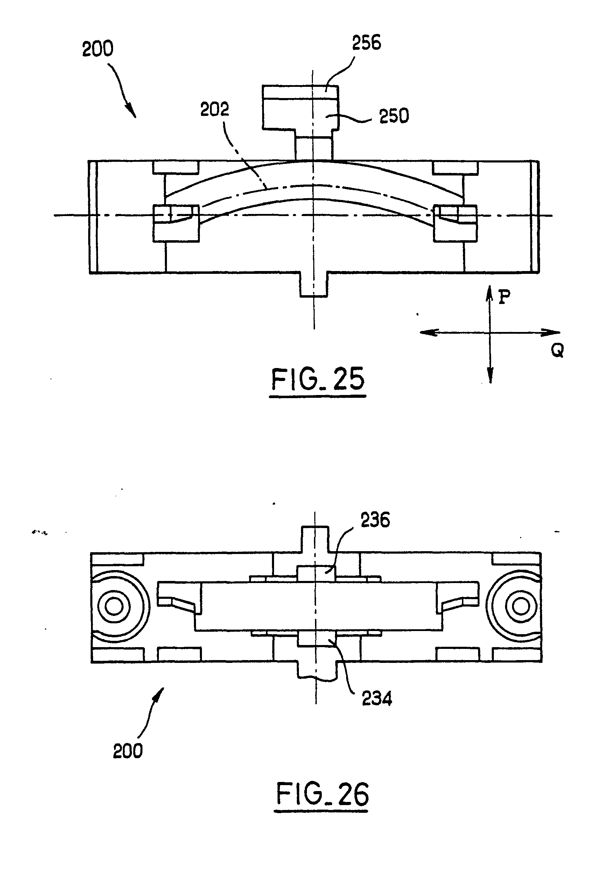

la figure 25 représente une vue de dessus du coulisseau de commande utilisé dans le même commutateur électrique selon une vue illustrée par la flèche référencée XXV sur la figure 17,

la figure 26 illustre une vue de dessous, selon la flèche illustrée sous la référence XXVI sur la figure 17, du même coulisseau de commande,

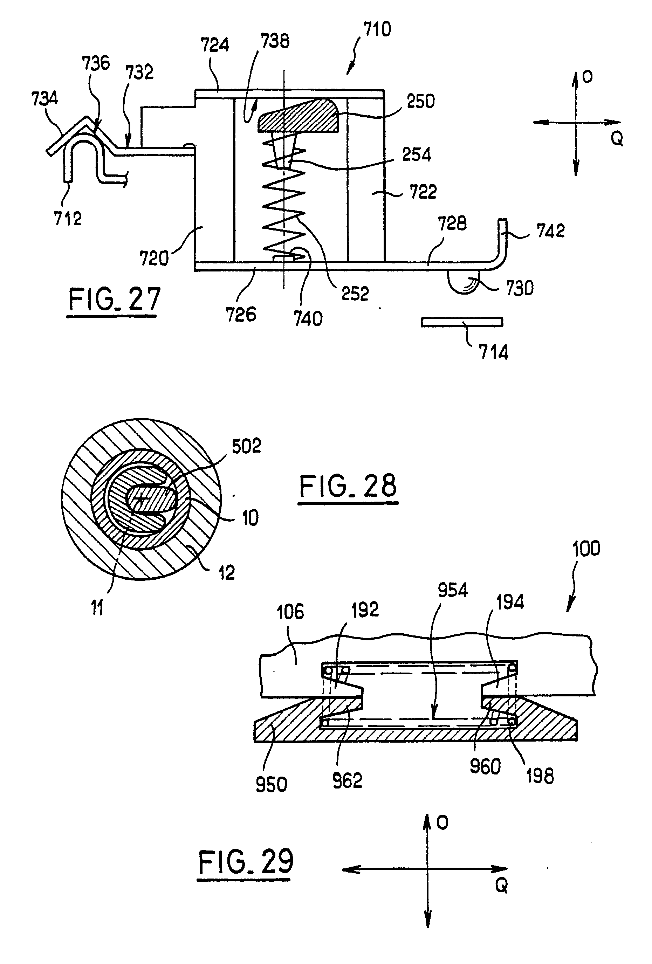

la figure 27 représente une vue latérale de la lamelle d'appel phare utilisée dans le même commutateur selon une vue illustrée par la flèche référencée XXVII sur la figure 17,

la figure 28 représente une vue en coupe du levier de commande selon le plan de coupe référencé XXVIII—XXVIII sur la figure 17,

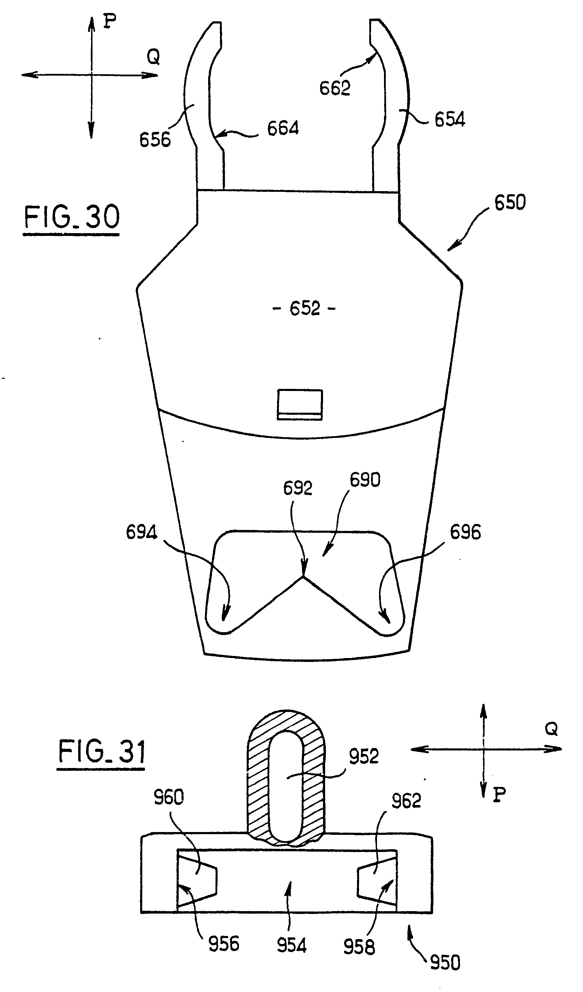

la figure 29 représente une vue partielle en coupe du même commutateur électrique selon un plan de coupe référence XXIX—XXIX sur la figure 17,

la figure 30 représente une vue de dessus d'une chape utilisée dans le même commutateur selon une vue illustrée sous la référence XXX sur la figure 17,

la figure 31 représente une vue partiellement en coupe, telle qu'illustrée sous la référence XXXI—XXXI sur la figure 17 d'un coulisseau de forçage utilisé dans le même commutateur électrique,

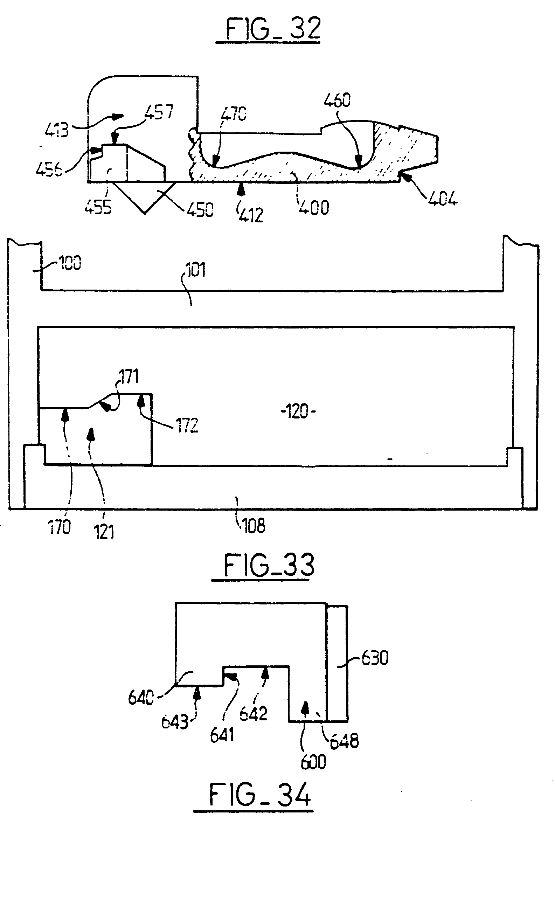

les figures 32 à 37 illustrent un autre mode de réalisation des moyens de verrouillage aptes à bloquer le tiroir de contact dans sa seconde position, plus précisément:

la figure 32 représente une vue latérale du tiroir de contact utilisé dans ce mode de réalisation,

la figure 33 représente une vue correspondante du boîtier recevant le chariot,

la figure 34 représente une vue latérale schématique du même chariot, et

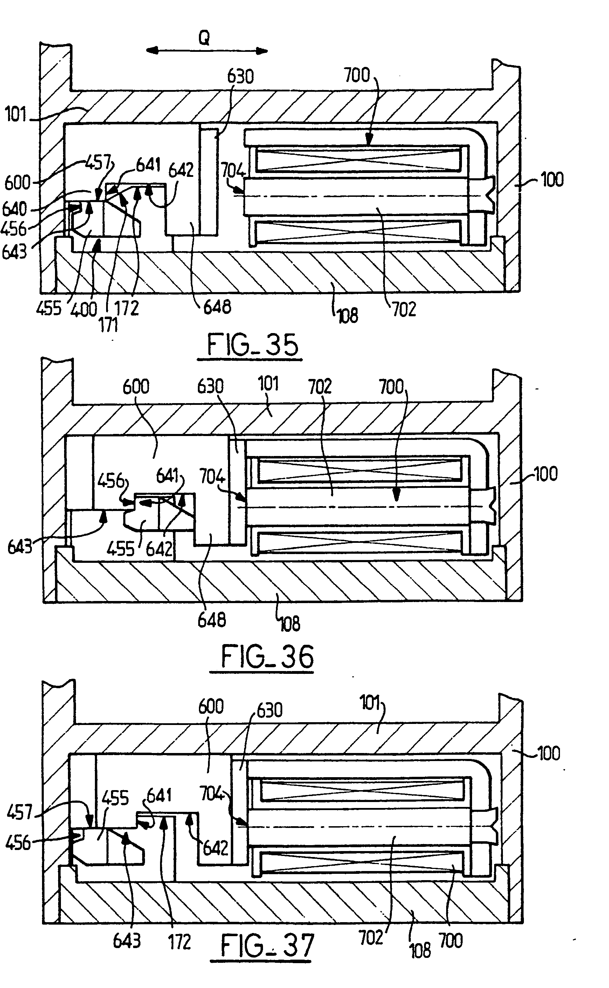

les figures 35, 36 et 37 représentent schématiquement différentes étapes de fonctionnement du commutateur intégrant ces moyens de verrouillage.

A des fins de simplification, la description qui va suivre sera faite en regard d'un système de coordonnées orthogonal dont les trois axes O, P et Q illustrés schématiquement sur les figures se coupent à angle droit et seront dénommés respectivement axe principal, axe secondaire et axe auxiliaire par la suite.

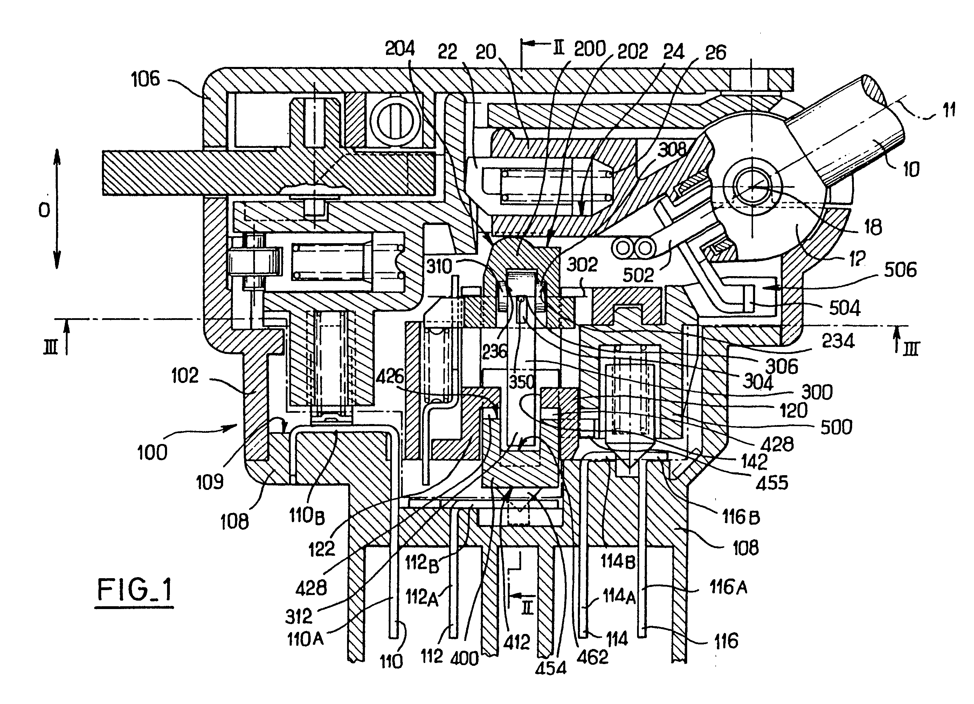

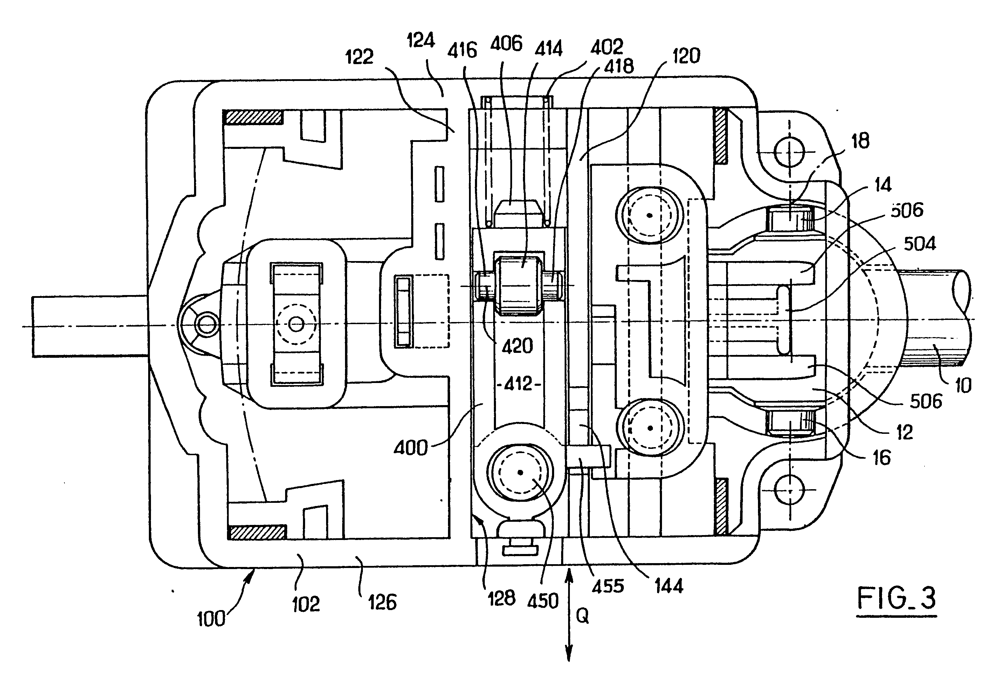

L'axe principal O est parallèle aux plans des figures 1, 2, 4, 5, 6, 7, 8, 10, 11, 12, 13, 14, 15, 16, 17, 19, 21, 22, 27, 29, 32, 33 et perpendiculaire aux plans des figures 3, 18, 20, 23, 24, 25, 26, 30, 31, 34, 35, 36, 37.

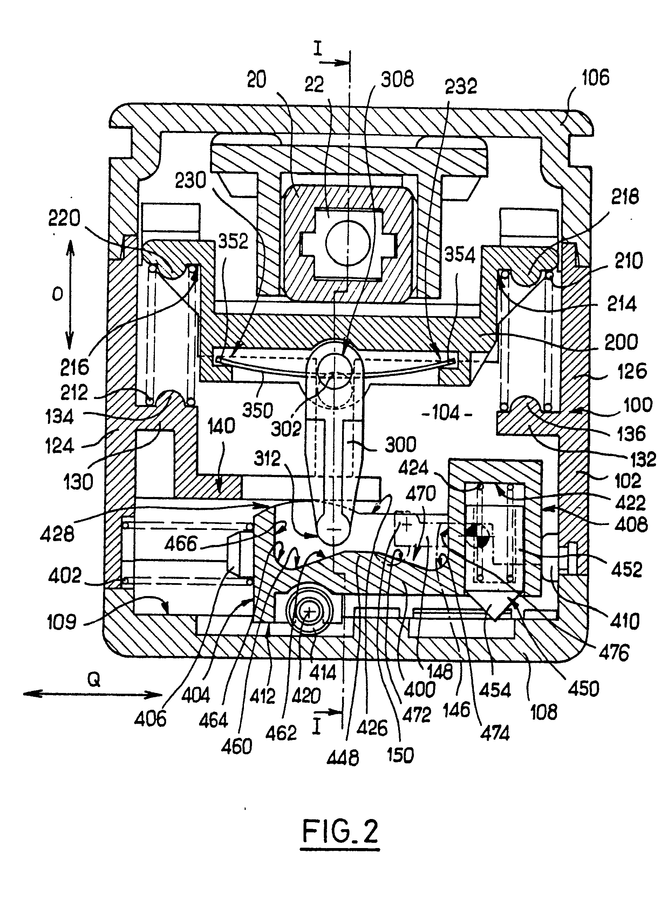

L'axe secondaire P est parallèle aux plans des figures 1, 3, 18, 20, 21, 22, 23, 24, 25, 26, 30, 31, 34, 35, 36, 37 et perpendiculaire aux plans des figures 2, 4, 5, 6, 7, 8, 10, 11, 12, 13, 14, 15, 16, 17, 19, 27, 29, 32, 33.

L'axe auxiliaire Q est parallèle aux plans des figures 2, 3, 4, 5, 6, 7, 8, 10, 11, 12, 13, 14, 15, 16, 18, 19, 20, 23, 24, 25, 26, 27, 29, 30, 31, 32, 33, 34, 35, 36, 37, et perpendiculaires aux plans des figures 1, 17, 21, 22.

On va dans un premier temps décrire le PREMIER MODE DE REALISATION ILLUSTRE SUR LES FIGURES 1 à 8.

Sur les figures on a référencé schématiquement 100 le boîtier du commutateur qui loge un coulisseau de commande 200, un palette 300 et un tiroir de contact 400.

Le boîtier 100 peut faire l'objet de nombreuses variantes de réalisation et ne sera donc pas décrit en détail par la suite.

On notera néanmoins que selon le mode de réalisation illustré à titre d'exemple sur les figures 1, 2 et 3 le boîtier 100 est formé par un corps médian 102 et deux chapeaux 106, 108. Le corps 102 définit un logement interne 104 qui débouche de part et d'autre du corps. Le logement 104 est obturé par les chapeaux 106 et 108 précités. Les chapeaux s'étendent perpendiculairement à l'axe principal O. Le chapeau 108 porte une pluralité de lamelles de contacts électriques 110, 112, 114 et 116, selon l'illustration de la figure 1. Chacune de ces lamelles comprend de préférence une aile principale 110A, 112A, 114A, 116A transversant le chapeau 108 et émergeant à l'extérieur de celui-ci et une aile secondaire 110B, 112B, 114B et 116B, orthogonale à l'aile principale et plaquée contre la surface interne du chapeau 108 pour coopérer avec des plots de contact portés par exemple par le tiroir 400.

Le corps 102 possède deux parois latérales 124, 126, généralement parallèles aux axes principal et secondaire O et P. Le corps possède de plus sensiblement à mi-longueur deux voiles parallèles 120, 122. Ces voiles s'étendent perpendiculairement aux parois latérales 126, 124 du corps 102 et sensiblement perpendiculairement aux plans moyens des chapeaux 106, 108. Les voiles 120, 122 en combinaison avec les parois latérales 124, 126 définissent une chambre 128. Cette chambre 128 possède une section droite constante (considérée dans un plan perpendiculaire au plan de coupe des figures 1 et 2 et parallèlement au plan de coupe de la figure 3). Cette chambre 128 reçoit à translation le coulisseau de commande 200 et le tiroir de contact 400.

Plus précisément encore, le coulisseau de commande 200 est guidé à translation dans la chambre 128 par les voiles 120, 122 parallèlement à l'axe principal O.

Par ailleurs, la chambre 128 guide le tiroir de contact 400 à translation parallèlement à l'axe auxiliaire Q.

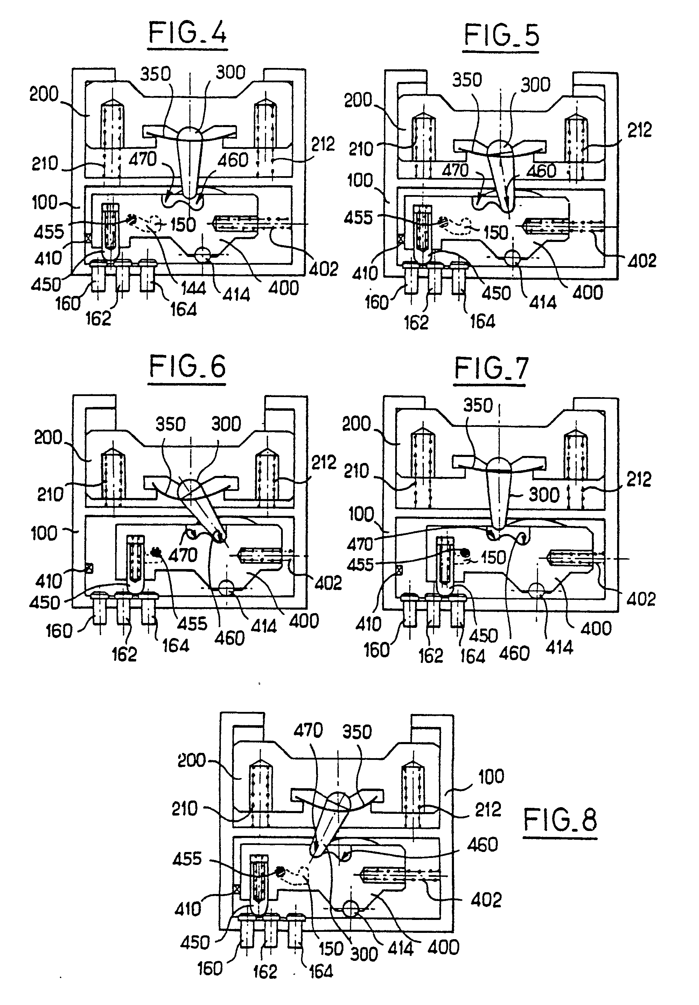

Le coulisseau de commande 200 est ainsi susceptible de déplacement dans la chambre 128 entre une position de repos telle qu'illustrée sur les figures 1 et 2 dans laquelle le coulisseau de commande 200 n'agit pas sur le tiroir de contact 400 et une position de travail (illustrée schématiquement sur les figures 5, 6 et 8) dans laquelle le coulisseau 200 commande le déplacement du tiroir de contact 400 dans la chambre 128 parallèlement à l'axe auxiliaire Q.

Le déplacement du coulisseau de commande 200 entre les positions de repos et de travail précitées peut être assuré à l'aide de nombreux moyens d'entraînement.

Selon le mode de réalisation illustré sur les figures 1 et 2, le coulisseau de commande 200 est déplacé à translation dans la chambre 128 par un levier 10 émergeant à l'extérieur du boîtier 100 et monté à rotation sur celui-ci autour d'un axe 18 par l'intermédiaire d'une rotule 12 équipée de tourillons diamétralement opposés 14, 16 coaxiaux à l'axe de pivotement 18 précité et portés à rotation sur le corps 102 du boîtier. L'axe 18 de pivotement du levier de commande 10 s'étend parallèlement à la direction de translation du tiroir de contact.

Le levier 10 est prolongé à l'intérieur du boîtier 100, au-delà de l'axe 18, par un doigt 20 qui repose contre la surface supérieure 202 du coulisseau de commande. Plus précisément, le doigt 20 repose contre une calotte convexe cylindrique 204 prévue sur la surface supérieure 202 du coulisseau dans une direction générale parallèle à la direction de translation du tiroir 400 (axe auxiliaire Q). L'axe 18 de pivotement du levier 10 étant parallèle aux voiles 120, 122 et placé à l'extérieur de la chambre 128, l'homme de l'art comprendra aisément que le pivotement du levier 10 et donc du doigt 20 autour de l'axe 18 dans la mesure où le doigt 20 repose contre la surface 204 du coulisseau induit une translation de ce dernier parallèlement à l'axe principal O précité grâce au guidage du coulisseau 200 réalisé par la chambre 128.

De préférence, le levier 10 est équipé d'un indexage en position dans sa rotation autour de l'axe 18. Selon le mode de réalisation représenté sur les figures cet indexage en position est réalisé par un plot 22 logé dans un alésage borgne 24 ménagé dans l'extrémité du doigt 20, le plot 22 étant sollicité vers l'extérieur de l'alésage 24 par un ressort 26.

De plus, le coulisseau de commande 200 est sollicité vers la position de repos représentée sur les figures 1 et 2. Selon le mode de réalisation représenté sur les figures cette sollicitation du coulisseau 200 vers la position de repos est opérée par une paire de ressorts 210, 212. Ces ressorts hélicoïdaux 210, 212 sont intercalés entre des surfaces 214, 216 du coulisseau dirigées vers le tiroir et des toiles 130, 132 solidaires des parois latérales 124, 126 et en saillie vers l'intérieur du logement 104.

Plus précisément, les ressorts 210, 212 sont maintenus en position grâce à des protubérances hémisphériques 218, 220 prévues sur les surfaces 214, 216 et à des protubérances hémisphériques 134, 136 prévues sur les toiles 130, 132 et engagées dans les extrémités respectivements des ressorts 210, 212.

La palette 300 s'étend dans une direction générale parallèle à la direction de déplacement du coulisseau 200 (axe principal O). La palette 300 est disposée sur le côté du coulisseau de commande 200 dirigé vers le tiroir 400. Cette palette 300 est portée à pivotement sur le coulisseau 200 autour d'un axe référencé 302. L'axe 302 s'étend parallèlement à l'axe secondaire P.

La palette 300 est sollicitée élastiquement vers la position de repos représentée sur les figures 1 et 2 dans laquelle la palette 300 s'étend dans la direction générale de déplacement du coulisseau 200.

Selon le mode de réalisation représenté sur les figures la palette 300 est sollicitée élastiquement vers cette position de repos par un ressort 350. En l'espèce le ressort 350 est un ressort filiforme type "corde à piano" engagé sur la palette 300 et porté par le coulisseau de commande 200. Plus précisément, le ressort 350 est engagé dans un évidement 304 de section droite quadrangulaire ménagé dans la palette 300. L'évidement 304 traverse la palette 300 perpendiculairement à l'axe de pivotement 302. L'évidement 304 est réalisé à l'opposé du coulisseau de commande 200 par rapport à l'axe de pivotement 302. L'évidement 304 présente une face plane 306 dirigée vers le tiroir de contact 400, perpendiculaire à la direction générale de la palette, coïncidant sensiblement avec l'axe de pivotement 302. Cette face plane 306 sert d'appui au ressort 350. Ce dernier s'étend sensiblement parallèlement à l'axe auxiliaire Q et à la direction de translation du tiroir 400 sur la face du coulisseau 200 dirigée vers le tiroir 400. Les extrémités 352, 354 du ressort 350 sont immobilisées dans des cavités symétriques 230, 232 ménagées sur le coulisseau 200. Le pivotement de la palette 300 autour de l'axe 302 est assuré par deux tourillons 308, 310 coaxiaux à l'axe 302 reposant contre des portées cylindriques 234, 236 dirigées vers le tiroir 400 et ménagées sur le coulisseau 200.

L'extrémité de la palette 300 adjacente au tiroir de contact 400 est définie par une calotte hémicylindrique 312 centrée sur un axe parallèle à l'axe de pivotement 302.

On va maintenant décrire la structure du tiroir 400. Comme indiqué précédemment le tiroir 400 est guidé à translation dans la chambre 128 parallèlement à l'axe auxiliaire Q. Le tiroir 400 est sollicité dans la position de repos représentée sur la figure 2 par un ressort hélicoïdal 402. Ce ressort 402 est intercalé entre la paroi latérale 124 du boîtier et une surface latérale 404 du tiroir 400 qui lui fait vis-à-vis. L'extrémité du ressort 402 adjacente à la surface latérale 404 est engagée sur un téton 406 solidaire de cette dernière. Dans la position de repos illustré sur la figure 2 sollicitée par le ressort 402 le tiroir de contact 400 respose par sa surface latérale 408 opposée à la surface latérale 404 précitée contre une butée élastique 410 par exemple en caoutchouc portée par la paroi latérale 126 du boîtier.

Le tiroir de contact 400 du côté de sa surface 412 opposée au coulisseau de commande 200 repose contre la surface interne 109 du chapeau 108 par un galet 414 d'une part, et par un plot de contact 450 d'autre part. Le galet de contact 414 est porté à pivotement sur le tiroir 400 autour d'un axe 420 parallèle à l'axe 302 de pivotement de la palette 300.

Le galet de contact 414 est ainsi porté à pivotement sur le tiroir 400 par deux tourillons 416, 418 coaxiaux à l'axe 420 et reposant contre des portées cylindriques dirigées vers la surface interne 109 du chapeau 108, ménagées sur le tiroir 400.

Plus précisément encore, le plot de contact 450 précité vient reposer contre les ailes secondaires des lamelles de contact supportées par le chapeau 108 telles que la lamelle 112 illustrée sur la figure 1. Ainsi, le plot de contact 450 est adapté pour court-circuiter des paires respectives de lamelles pour fermer le circuit d'alimentation alternativement des moyens d'éclairage code et des moyens d'éclairage phare du véhicule automobile.

Le plot de contact 450 est logé dans un alésage borgne 422 ménagé dans le tiroir 400 et débouchant sur la face 412 du tiroir 400.

Le plot de contact 450 est sollicité vers l'extérieur de l'alésage 422 par un ressort hélicoïdal 424.

Le plot de contact 450 comprend avantageusement un fût cylindrique 452 dont le diamètre est sensiblement égal tout en étant légèrement inférieur au jeu près au diamètre de l'alésage 422 et une tête conique 454 reposant contre les lamelles de contact.

Sur sa face 426 dirigée vers le coulisseau 200 et opposée à la surface 412 précitée le tiroir 400 comprend deux calottes convexes cylindriques 428. Ces calottes 428 convexes reposent contre une toile 140 solidaire de la paroi latérale 124 et des voiles 120, 122 en saillie dans la chambre 128 parallèlement à l'axe auxiliaire Q. Cette toile 140 est munie d'une ouverture oblongue 142 recevant à pivotement la palette 300.

Le point de contact des calottes cylindriques 428 sur la toile 410 est défini par une génératrice parallèle aux axes 302 et 420 située sensiblement dans un plan parallèle à l'axe principal O et passant par l'axe 420 de pivotement du galet de contact 414. Il en résulte que le ressort 424 sollicitant le plot de contact 450 vers l'extérieur de l'alésage 422 tend à induire un pivotement du tiroir de contact 400 dans le sens contraire des aiguilles d'une montre par rapport à la représentation de la figure 2. Pour éviter un tel pivotement, le tiroir de contact 400 est muni d'un téton 455 en saillie perpendiculairement à un plan défini par les axes principal et auxiliaire O et Q et logé dans une lumière 144 ménagée dans le voile 120. Le ressort 424 sollicité le téton 455 en rapprochement du coulisseau 200. Ainsi le téton 455 repose contre la surface 146 de la lumière 144 dirigée à l'opposé du coulisseau 200 vers le chapeau 108.

La lumière 144 possède d'une part un segment principal 148 qui s'étend d'une façon générale parallèlement à l'axe auxiliaire Q et un segment de verrouillage 150 qui s'étend perpendiculairement à l'axe auxiliaire Q. Le segment de verrouillage 150 est disposé à l'extrémité du segment principal 148 opposée à la paroi latérale 126 portant la butée élastique 410 contre laquelle le tiroir 400 vient en appui dans la position de repos sollicitée par le ressort 402.

De plus, sur sa face 426 dirigée vers le coulisseau de commande 200 le tiroir de contact 400 est pourvu de deux rampes 460, 470. Ces rampes 460, 470 sont adaptées pour coopérer alternativement avec l'extrémité 312 de la palette 300. Pour cela, les rampes 460, 470 sont adaptées pour être placées alternativement en regard de l'extrémité 312 de la palette 300, selon la position du tiroir 400 parallèlement à l'axe auxiliaire Q.

Les cames 460, 470 sont définies par des génératrices s'étendant parallèlement aux axes de pivotement 302 et 420 précites. La zone intermédiaire entre les cames 460, 470 est référencée 448 sur la figure 2.

Chacune des cames 460, 470 présente à partir de la zone intermédiaire 448 vers l'extérieur, c'est-à-dire respectivement vers les faces 404 et 408 du tiroir, une surface inclinée sur l'axe auxiliaire Q, qui converge vers le chapeau 108 en éloignement de la zone intermédiaire 448 et une zone d'appui pour l'extrémité 312 de la palette 300 qui s'étend transversalement à l'axe auxiliaire Q.

Plus précisément, selon le mode de réalisation considéré actuellement comme préférentiel représenté sur la figure 2, chacune des cames 460, 470 présente à partir de la zone intermédiaire 448, respectivement vers les faces latérales 404 et 408 du tiroir, successivement une face plane 462, 472 inclinés sur l'axe auxiliaire Q et convergeant vers le chapeau 108 en éloignement de la zone intermédiaire 448, une surface 464, 474 en forme de calotte concave hémicylindrique puis une surface d'appui 466, 476 plane et perpendiculaire à l'axe auxiliaire Q.

Selon la position du tiroir de contact 400 dans la chambre 128 la zone intermédiaire 448 des rampes est disposée respectivement de part et d'autre de l'extrémité 312 de la palette 300. Ainsi, lorsque le coulisseau de commande 200 est entraîné à translation parallèlement à l'axe principal O par le levier 10 l'extrémité 312 de la palette 300 glisse respectivement contre l'une des deux surfaces planes 462 ou 472 des rampes 460, 470 pour venir reposer contre les surfaces concaves hémicylindriques 464, 474 afin de solliciter le tiroir de contact à translation parallèlement à l'axe auxiliaire Q. Cette disposition sera décrite plus en détail par la suite. On remarquera par ailleurs à l'examen des figures annexées que le segment 150 de verrouillage de la lumière 144 qui s'étend perpendiculairement à l'axe auxiliaire Q s'étend par rapport au segment principal 148 en rapprochement du coulisseau de commande 200. Ainsi, le segment de verrouillage 150 interrompt la surface d'appui 146 de la lumière dirigée à l'opposé du coulisseau de commande 200 et servant d'appui au téton 455 pour limiter le pivotement du tiroir de contact 400 induit par le ressort 424.

On remarquera de plus à l'examen des figures annexées que selon la présente invention la course du tiroir de contact 400 parallèlement à l'axe auxiliaire Q et la position des rampes 460, 470 sur le tiroir 400 sont telles que selon la position du tiroir 400 dans le boîtier, des génératrices passant par l'axe de pivotement 402 de la palette 300 et respectivement l'un ou l'autre des fonds 464, 474 des rampes 460, 470 contre lesquels vient en appui l'extrémité 312 de la palette 300 passent respectivement de part et d'autre du point d'appui 414 du tiroir de contact 400 contre le boîtier 100.

Grâce à cette disposition lorsque l'extrémité 312 de la palette 300 repose contre le fond 464 de la rampe 460 pour déplacer le tiroir de contact 400 en éloignement de sa position de repos, la palette 300 applique sur le tiroir 400 un couple pivotant de même sens que le couple indyit par le ressort 424 pour solliciter le téton 455 vers le segment de verrouillage 150 et maintenir le tiroir de contact en éloignement de sa position de repos.

Par contre, lorsque l'extrémité 312 de la palette 300 repose contre le fond hémicylindrique 474 de l'autre rampe 470, la palette 300 sollicite le tiroir de contact 400 vers la position illustrée sur la figure 2 (en coopération avec le ressort 402). De plus, la palette 300 applique sur le tiroir 400 un couple de pivotement (dirigé dans le sens des aiguilles d'une montre selon la représentation de la figure 2) qui est opposé à celui du ressort 424 logé dans l'alésage 422 pour sortir le téton 455 du segment 150 de la lumière 144, pour déverrouiller le tiroir 400 et autoriser le retour de celui-ci vers la position de repos.

On notera à l'examen des figures annexées que la zone intermédiaire 448 disposée entre les rampes 460 et 470 est prévue entre les points de contact du tiroir 400 sur le chapeau 108, déterminés respectivement par le galet de contact 414 et par le plot de contact 450. De même, la lumière 144 et le téton 455 sont prévus entre les deux points de contact précités.

On va maintenant décrire le fonctionnement du commutateur bi-stable conforme à ce premier mode de réalisation en regard des figures 4, 5, 6, 7 et 8 annexées.

Sur la figure 4 le commutateur bi-stable est représenté en position de repos.

Le coulisseau de commande 200 est sollicité en éloignement du tiroir de contact 400 par les ressorts 210 et 212. L'extrémité 312 de la palette 300 est donc éloignée du tiroir de contact 400. La palette 300 est de ce fait placée en position de repos par le ressort 350 et s'étend sensiblement parallèlement à l'axe principal O. Le tiroir de contact 400 est poussé par le ressort 402 contre la butée élastique 410. Le téton 455 est placé à l'extrémité de la lumière 144 opposée au segment de verrouillage 150. L'extrémité 312 de la palette 300 est placée en regard de la surface plane 462 de la came 460. Le plot de contact 450 par sa tête conique 454 court-circuite deux lamelles de contact ou deux plots de contact référencé(e)s 160 et 162 sur la figure 4, porté(e)s par le chapeau 108 et traversant celui-ci. La liaison électrique entre les plots 160 et 162 permet de fermer le circuit d'alimentation de l'éclairage code du véhicule automobile.

On a représenté sur la figure 5 la première phase de déplacement du coulisseau de commande 200 pour assurer la commutation de l'éclairage code vers l'éclairage phare. Le levier de commande 10 étant pivoté autour de son axe 18 le coulisseau de commande 200 est déplacé à translation parallèlement à l'axe principal O en rapprochement du tiroir de contact 400. Lorsque l'extrémité 312 de la palette 300 vient en contact avec la surface 462 de la rampe 460, la palette 300 est sollicitée à pivotement dans le sens des aiguilles d'une montre selon la représentation de la figure 2, dans le sens contraire des aiguilles d'une montre selon l'illustration des figures 4 à 8.

L'extrémité 312 de la palette 300 vient ainsi en appui contre le fond cylindrique 464 de la rampe 460. Le ressort 350 fléchit au cours de ce pivotement de la palette 300. Dans cet état illustré sur la figure 5, le tiroir de contact 400 et les éléments qui lui sont liés occupent la même position que celle précédemment décrite en regard de la figure 4.

Si le levier 10 est relâché la coulisseau de commande 200 reprend sa position de repos illustrée sur la figure 4 grâce à la sollicitation élastique du aux ressorts 210 et 212. La position du coulisseau de commande 200 illustrée sur la figure 5 est donc une position instable. Cette position instable peut être utilisée pour commander des fonctions accessoires telles qu'une appel phare. Cette disposition classique en soi en sera pas décrite plus en détail par la suite.

On a représenté sur la figure 6 la position du coulisseau de commande 200 et du tiroir de contact 400 après commutation de la position éclairage code à la position éclairage phare. La progression du basculement du levier de commande 10 autour de son axe 18 à poursuivi le déplacement de coulisseau de commande 200 en rapprochement du tiroir 400 à l'encontre de la sollicitation élastique des ressorts 210 et 212. Comme illustré sur la figure 5 après que l'extrémité 312 de la palette ait glissé sur la surface 462 contre le fond cylindrique 464 de la rampe 460 l'axe de la palette 300 passant par l'axe de pivotement 302 et par le point de contact central de l'extrémité 312 contre le fond cylindrique 464 est incliné sur la direction de translation du coulisseau de commande 200 en rapprochement de la paroi latérale 124 vers le tiroir de contact 400. De ce fait, comme cela est illustré sur la figure 6 la progression de la translation du coulisseau de commande 200 entre la position représentée sur la figure 5 dans laquelle l'extrémité 312 de la palette vient juste de contacter le fond cylindrique 464, et la position représentée sur la figure 6, induit un déplacement du tiroir de contact 400 vers la paroi latérale 124, à l'encontre du ressort 402. Au cours de ce déplacement en translation le téton 455 glisse dans le segment principal 148 de la lumière 144 vers le segment de verrouillage 150. On remarquera que, au cours de cette translation du tiroir 400 vers la paroi latérale 124 le ressort 424 exerce sur le tiroir un couple de pivotement (dans le sens contraire des aiguilles d'une montre sur la figure 2 et dans le sens des aiguilles d'une montre selon la représentation des figures 4 à 8) qui sollicite le téton 455 contre la surface 146 de la lumière 144 qui débouche dans le segment de verrouillage 150. De même la prolongation de la génératrice passant par l'axe de pivotement 302 et le centre du point de contact de l'extrémité 312 de la palette 300 sur le fond cylindrique 464 passe d'un côté du point de contact du galet 414 sur le chapeau 108, opposé au téton 455. Ainsi, la palette 300 exerce également sur le tiroir de contact 400 un couple de pivotement agissant dans le même sens que le ressort 424. De ce fait, lorsque le téton 455 parvient en regard du segment de verrouillage 150 il est poussé dans celui-ci pour verrouiller le tiroir de contact dans la position de travail illustrée sur la figure 6. Le téton 455 étant prisonnier dans le segment 150 le ressort 402 ne peut plus repousser le tiroir de contact dans la position de repos illustrée sur la figure 4.

Le plot de contact 450 qui suit le tiroir de contact court-circuite alors une autre paire de lamelles ou plots de contact 162, 164 porté(e)s par le chapeau 108.

On remarquera que avantageusement l'un des plots 162 médian est commun aux deux paires de contact court-circuitées par le plot 450 respectivement dans les positions de repos et de travail illustrées sur les figures 4 et 6. La liaison existant entre les plots 162 et 164 dans la position illustrée sur la figure 6 permet de fermer le circuit d'alimentation des moyens d'éclairage phare du véhicule automobile.

On remarquera de plus que l'angle d'inclinaison de la palette 300 par rapport à l'axe principal O augmente au cours de la progression du déplacement du coulisseau de commande 200 de la position représentée sur la figure 5 à la position représentée sur la figure 6 de telle sorte que l'effort exercé sur le levier de commande 10 pour déplacer le tiroir de contact soit progressivement réduit. Cette disposition permet d'obtenir un déplacement brusque du tiroir de contact et autorise une coupure sous courant de puissance.

On a représenté sur la figure 7 la position occupée par le coulisseau de commande 200, la palette 300 et le tiroir de contact 400 après relâchement du levier de commande 10. Les ressorts 210, 212 repoussant le coulisseau de commande 200 en position de repos éloignée du tiroir de contact 400. Le ressort 350 sollicite alors la palette 300 en position de repos dans laquelle la palette s'étend sensiblement parallèlement à l'axe principal O. L'extrémité 312 de la palette 300 est à nouveau éloignée des rampes 460, 470. Néanmoins, compte-tenu du déplacement en translation du tiroir de contact 400 l'extrémité 312 de la palette 300 est maintenant placée en regard de la rampe 470. Le tiroir de contact 400 et les éléments qui lui sont liés sont quant à eux immobilisés dans la position précédemment décrite en regard de la figure 6 grâce au téton 455 engagé dans le segment de verrouillage 150.

On a représenté sur la figure 8 la position du coulisseau de commande 200, de la palette 300 et du tiroir de contact 400 après un nouvel actionnement du levier 10 pour reporter le tiroir 400 dans la position de repos précitée.

Le coulisseau de commande 200 est à nouveau déplacé en translation parallèlement à l'axe principal O en rapprochement du tiroir de contact 400 à l'encontre des ressorts 210 et 212. Lorsque l'extrémité 312 de la palette 300 vient en contact avec la surface 472 de la rampe 470, la palette 300 est sollicitée à pivotement dans le sens opposé à celui obtenu précédemment lors du passage de la position représentée sur la figure 4 à la position représentée sur la figure 5. En effet, l'extrémité 312 de la palette 300 glisse alors sur la surface 472 qui présente une inclinaison opposée à celle de la surface 462 précitée. Ainsi, la palette 300 pivote dans le sens contraire des aiguilles d'une montre selon la représentation de la figure 2 et dans le sens des aiguilles d'une montre selon la représentation des figures 4 à 8. L'extrémité 312 de la palette 300 tombe dans le fond 474 de la ramp 470. La palette 300 applique alors sur le tiroir de contact 400 un couple de pivotement opposé à celui exercé par le ressort 424, qui repousse le téton en dehors du segment de verrouillage 150 dans le segment principal 148 de la lumière 144. Le ressort 402 en liaison avec la palette 300 repousse alors brusquement le tiroir de contact dans la position de repos illustrée sur la figure 8. Le téton 455 se déplace dans le segment principal 148 en éloignement du segment de verrouillage 150 et le plot de contact 450 est reporté en regard des plots 160 et 162 pour court-circuiter ceux-ci. Le circuit d'alimentation de l'éclairage code du véhicule automobile est à nouveau fermé. La butée élastique 410 amortit l'arrêt du tiroir de contact 400. Lorsque le levier de commande 10 est relâché le coulisseau de commande 200 est déplacé dans la position de repos en éloignement du tiroir de contact 400 par les ressorts 210, 212. La palette 300 reprend sa position de repos dans la direction de l'axe principal O grâce à la sollicitation élastique du ressort 350. L'extrémité 312 de la palette 300 est à nouveau placée en regard de la rampe 460, comme représenté sur la figure 4. Le commutateur est prêt pour un nouveau cycle de fonctionnement en commençant par une commutation dans le sens éclairage code vers l'éclairage phare.

On remarquera que lors du passage de la position représentée sur la figure 7 (éclairage phare) à la position représentée sur la figure 8 (éclairage code) le couple de pivotement exercé par la palette 300 sur le tiroir 400 dans le sens de l'éjection du téton 455 vers l'extérieur du segment de verrouillage 150 est dû au fait que à l'opposé de l'état représenté sur la figure 5 une génératrice passant par l'axe de pivotement 302 de la palette 300 et le centre du point de contact de l'extrémité 312 de la palette contre le fond cylindrique 474, dans la position représentée sur la figure 8, passe du côté de la lumière 144 par rapport au point de contact du galet 414 sur le chapeau 108.

Le cas échéant, le commutateur bi-stable conforme à la présente invention peut comporter de plus un élément de déverrouillage apte à recouvrir le segment 150 de la lumière 144. Si cet élément de déverrouillage recouvre en permanence le segment 150, la position du tiroir 400 représentée schématiquement sur la figure 6 correspondant à la position éclairage phare est une position instable. En effet, le téton 455 ne pouvant pénétrer dans le segment de verrouillage 150, le tiroir de contact 400 sera repoussé vers la position de repos contre lu butée élastique 410, par le ressort 402 dès que le levier de commande 10 est relâché. On peut également utiliser un élément de déverrouillage mobile et commandé à déplacement entre une position dans laquelle il recouvre le segment de verrouillage 150 et une position dans laquelle il ne recouvre pas ce segment. L'élément de verrouillage permet alors une logique de fonctionnement plus élaborée du commutateur bistable conforme à la présente invention. L'élément de déverrouillage permet en effet d'assurer automatiquement un retour en position de repos, éclairage code, du commutateur, à l'aide d'un moyen de commande annexe, sans nécessiter un nouveau basculement du levier 10.

Comme indiqué précédemment, cet élément de déverrouillage peut être commandé par le passage des moyens de commande d'éclairage en position éclairage ville afin d'imposer une transition ultérieure de l'éclairage ville à l'éclairage code et non point une transition de l'éclairage ville à l'éclairage phare.

Un tel élément de déverrouillage mobile pour recouvrir sélectivement le segment de verrouillage 150 peut être formé d'un équipage schématiquement représenté sous la référence 500 sur la figure 1. Cet équipage 500 est guidé à translation parallèlement à l'axe auxiliaire Q contre le voile 120. Le déplacement en translation de l'équipage mobile 500 peut être assuré par un doigt 504 excentré sur une tige 502 engagée coaxialement dans le levier 10 et libre de rotation autour de l'axe 11 de ce dernier. Selon la représentation donnée sur la figure 1 le doigt 504 est engagé dans une fourchette 506 solidaire de l'équipage 500. L'homme de l'art comprendra aisément qu'un pivotement de la tige 502 autour de l'axe 11 du levier assure un pivotement correspondant du doigt 504 et de là une translation de l'équipage 500 permettant alternativement de recouvrir et découvrir le segment 150. L'équipage 500 est avantageusement muni d'une rampe inclinée sur sa direction de translation apte à contacter le téton 455 pour sortir celui-ci du segment de verrouillage 150 lorsque l'équipage 500 est déplacé vers la position de recouvrement de ce segment de verrouillage.

On va maintenant décrire la structure DES MOYENS DE VERROUILLAGE ILLUSTRES SUR LES FIGURES 9 à 16

Sur sa face 413 adjacente au voile 120, le tiroir de contact 400 est muni d'un téton 455.

Le téton 455 fait saillie par rapport à la face latérale 413 du tiroir de contact 400, perpendiculairement à un plan défini par les axes principal O et auxiliaire Q. Le téton 455 est placé sur le tiroir 400 entre le galet 414 et le plot de contact 450.

Ce téton 455 constitue un premier organe de verrouillage.

Il est prévu un second organe de verrouillage formé d'une lumière 610 méangée dans la face latérale 602 d'un chariot 600.

Plus précisément, le chariot 600 est guidé à translation sur le boîtier 100 parallèlement à l'axe auxiliaire Q. Ainsi, le chariot 600 et le tiroir de contact 400 sont disposés respectivement de part et d'autre du voile 120.

Le chariot 600 porte une lamelle 630 en matériau ferromagnétique adaptée pour coopérer avec une bobine 700 supportée fixe par le boîtier 100.

La lumière 610 ménagée dans la face latérale 602 du chariot 600 possède d'une part, un segment principal 612 qui s'étend d'une façon générale dans la direction de translation du tiroir de contact 400 et du chariot 600, et un segment de verrouillage 610 qui s'étend perpendiculairement à cette direction de translation et généralement parallèlement à l'axe principal O.

Le segment de verrouillage 614 est disposé à l'extrémité du segment principal 612 opposé à la paroi latérale 126 du boîtier servant d'appui au tiroir de contact 400 et au chariot 600, en position de repos de ceux-ci.

La bobine 700 est placée sur un noyau en matériau ferromagnétique 702 s'étendant parallèlement à l'axe auxiliaire Q en regard du chariot 600.

La bobine 700 et le noyau 702 sont supportés par le boîtier 100, en regard du chariot 600 à l'opposé de la paroi latérale 126 précitée du boîtier.

On a représenté schématiquement sur la figure 9 un commutateur auxiliaire de commande 800 relié aux bornes de la bobine 700 par deux liaisons filaires 802, 804 pour commander sélectivement l'alimentation de la bobine 700, à l'aide d'une source 806.

La lamelle 630 précité est portée par le chariot 600, en regard du noyau 702.

Selon le mode de réalisation considéré actuellement comme préférentiel, représenté sur les figures annexées, la lamelle 630 en matériau ferromagnétique portée par le chariot 600 est formée d'une pièce monobloc composée de deux branches généralement parallèles 632, 634 reliées par un pontet transversal 636. La lamelle 630 a ainsi la forme générale d'un U.

La lamelle 630 est engagée sur un pont support 620 solidaire du chariot 600.

Le support 620 est profilé perpendiculairement au plan défini par les axes principal O et auxiliaire Q. C'est-à-dire que le pont support 620 présente une section constante dans tous plans de coupe parallèles au plan défini par les axes principal O et auxiliaire Q.

Plus précisément encore, le support 620 solidaire du chariot 600 est délimité par une surface hémi-cylindrique 622 de révolution autour d'un axe parallèle à l'axe secondaire P et deux plans 624, 626 prolongeant la surface hémi-cylindrique 622 et convergeant légèrement en éloignement de celle-ci.

Le rayon de courbure de la surface hémicylindrique 622 est complémentaire du rayon de courbure interne du pontet 636 de la lamelle 630.

Ainsi, l'homme de l'art comprendra aisément que lorsque la lamelle en matériau ferromagnétique 630 est engagée sur le pont support 620, la lamelle 630 peut flotter légèrement, en pivotant autour de l'axe de révolution de la surface hémi-cyindrique 622 de telle sorte que la branche 632 de la lamelle 630 située en regard du noyau 702 puisse subir un léger déplacement à pivotement autour de l'axe précité, de telle sorte que la lamelle 630 puisse être plaquée étroitement contre le face transversale 704 du noyau 702 afin de réduire de façon optimale l'entrefer entre le noyau 702 de la lamelle 632.

On remarquera à l'examen de la figure 9 que de préférence la branche 632 de la lamelle 630 destinée à être plaquée contre la face transversale 704 du noyau 702 est une branche élargie par rapport au pontet de liaison 636 et à la seconde branche 634.

L'homme de l'art comprendra aisément à l'examen des figures annexées que le ressort 424 associé au plot de contact 450 sollicité le téton de verrouillage 455 contre la surface 616 de la lumière 610 dirigée à l'opposé du coulisseau de commande 200.

Le segment de verrouillage 614 débouche de plus sur cette surface 616 servant d'appui au téton 455.

On va maintenant décrire le fonctionnement du commutateur bi-stable conforme à la présente invention en regard des figures 12 à 16 annexées.

Sur ces sigures, seule la lumière de verrouillage 610 prévue sur le chariot 600 est représentée en trait continu, les autres éléments étant représentés en traits mixtes interrompus.

Sur la figure 12, le commutateur bi-stable est représenté en position de repos.

Le coulisseau de commande 200 est sollicité en éloignement du tiroir de contact 400 par les ressorts 210, 212. L'extrémité 312 de la palette 300 est éloignée du tiroir de contact 400. La palette 300 est placée en position de repos par le ressort 350 et s'étend sensiblement parallèlement à la direction de translation du coulisseau 200. Le tiroir de contact 400 est poussé par le ressort 402 contre une butée élastique 410. Le téton 455 est placé dans le segment de verrouillage 614 de la lumière 610 ménagée dans le tiroir 600.

L'extrémité 312 de la palette 300 est placée en regard de la rampe 460. Le plot de contact 450 court-circuite deux plots de contacts 160, 162 permettant avantageusement de fermer le circuit d'alimentation de l'éclairage code du véhicule automobile.

Le téton 455 étant engagé dans le segment de verrouillage 614, le chariot 600 est maintenu en position de repos adjacenté à la paroi latérale 126 du boîtier, comme illustré sur les figures 9 et 10.

En conséquence, le chariot 600 est éloigné de la bobine 700. La lamelle 630 est donc éloignée du noyau 702.

On a représenté sur la figure 13 la première phase de déplacement du coulisseau de commande 200 pour assurer la commutation de l'éclairage code vers l'éclairage phare. Le coulisseau de commande 200 est déplacé à translation en rapprochement du tiroir de contact 400. L'extrémité 312 de la palette 300 glisse sur la rampe 460, vers le fond de celle-ci, de telle sorte que la palette 400 est sollicitée à pivotement dans le sens contraire des aiguilles d'une montre selon l'illustration des figures 12 à 16.

Le ressort 350 fléchit au cours de ce pivotement de la palette 300. Dans l'état illustré sur la figure 13, le tiroir de contact 400 et le chariot 600 occupent la même position que celle précédemment décrite en regard de la figure 12. En conséquence, le téton 455 est toujours placé dans le segment de verrouillage 614 de la lumière 610.

Si le levier actionnant le coulisseau de commande 200 est relâché ce dernier reprend sa position de repos illustrée sur la figure 12 grâce à la sollicitation élastique due aux ressorts 210 et 212.

La position du coulisseau de commande 200 illustrée sur la figure 13 est donc une position instable.

Cette position instable peut être utilisée pour commander des fonctions accessoires telles qu'un appel phare. Cette disposition classique en soi ne sera pas décrite plus en détail par la suite.

La progression du déplacement du coulisseau de commande 200 en rapprochement du tiroir 400 à l'encontre de la sollicitation élastique des ressorts 210 et 212 permet d'obtenir une commutation de la position éclairage code à la position éclairage phare, telle qu'illustrée sur la figure 14. En effet, après que l'extrémité 312 de la palette ait glissé contre le fond de la rampe 460, l'axe de la palette 300 passant par l'axe de pivotement 302 et par le point de contact central de l'extrémité 312 de la palette contre le fond de la rampe 460 est incliné sur la direction de translation du coulisseau de commande 200 en éloignement de la surface latérale 126 précitée vers le tiroir de contact 400. De ce fait, comme cela est illustré sur la figure 14, la progression de la translation du coulisseau de commande 200 entre la position représentée sur la figure 13 dans laquelle l'extrémité 312 de la palette 300 vient juste de contacter le fond de la rampe 460, et la position représentée sur la figure 14, induit un déplacement du tiroir de contact 400 en éloignement de la paroi latérale 126, parallèlement à l'axe auxiliaire Q à l'encontre du ressort 402.

Au cours de ce déplacement le téton 455 entraîne le chariot 600 à translation dans la même direction, en rapprochement de la bobine 700.

Lorsque le tiroir de contact 400 atteint la seconde position illustrée sur la figure 14, la lamelle 630 solidaire du chariot 600 vient reposer contre le noyau 702 associé à la bobine 700.

On remarquera que au cours de la translation du tiroir 400 en éloignement de la paroi latérale 126, le ressort 424 exerce sur le tiroir 400 un couple de pivotement (dans le sens des aiguilles d'une montre, selon la représentation des figures 12 à 16) qui sollicite le téton 455 contre le fond du segment de verrouillage 614. De même la prolongation de la génératrice passant lar l'axe de pivotement 302 et le centre du point de contact de l'extrémité 312 de la palette 300 sur la rampe 460 passe d'un côté du point de contact du galet 414 sur le boîtier 100 opposé au téton 455. Ainsi, la palette 300 exerce également sur le tiroir de contact 400 un couple de pivotement agissant dans le même sens que le ressort 424. De ce fait, le téton 455 ne peut sortir du segment de verrouillage 614.

Dans la seconde position du tiroir de contact 400 illustré sur la figure 14, le plot de contact 450 qui suit le tiroir de contact 400, court-circuite une autre paire de lamelles ou plots de contacts 162, 164 porté(e)s par le boîtier 100. La liaison électrique entre les plots 162 et 164 permet de fermer le circuit d'alimentation de l'éclairage phare du véhicule automobile.

Si le commutateur auxiliaire 800 est ouvert, la bobine 700 n'est pas alimentée. Dans ce cas, lorsque le levier commandant le déplacement du coulisseau 200 est relâchè, le coulisseau 200 et la palette 300 associée sont repoussés en position de repos telle qu'illustré sur la figure 12 par les ressorts 210, 212, de même le tiroir de contact 400 est repoussé dans la première position illustré sur la figure 12 par le ressort 402; le chariot 600 suit le tiroir de contact 400 et est reporté en position de repos adjacente à la paroi latérale 126 du boîtier en raision de l'engagement du téton 455 dans le segment de verrouillage 614.

Le plot 450 revient alors court-circuiter la paire de contacts 160, 162 pour fermer le circuit d'alimentation de l'éclairage code du véhicule automobile.

La position d'éclairage phare illustré sur la figure 14 correspond dans ces conditions à une position instable.

Par contre, lorsque le commutateur auxiliaire 800 est fermé, la bobine 700 est alimentée. Dans ce cas, les éléments du commutateur occupent la position illustrée sur la figure 15 lorsque le levier assurant le déplacement du coulisseau de commande 200 est relâché après que le tiroir de contact 400 ait été porté dans la seconde position illustrée sur la figure 14.

On remarquera à l'examen de la figure 15 que les ressorts 210 et 212 repoussent le coulisseau de commande 200 en position de repos éloignée du tiroir de contact 400 (de façon identique à la première position illustrée sur la figure 12).

Le ressort 350 sollicite la palette 300 en position de repos dans laquelle la palette s'étend sensiblement parallèlement à l'axe principal O. L'extrémité 312 de la palette 300 est à nouveau éloigné des rampes 460, 470.

Néanmoins, le chariot 600 est maintenu accolé contre la bobine 700, en éloignement de la paroi latérale 126.

De ce fait, le tiroir de contact 400 est maintenu dans la seconde position, à l'encontre de la sollicitation élastique du ressort 402 grâce au téton 455 engagé dans le segment de verrouillage 614.

Ainsi, en raison du déplacement à translation du tiroir de contact 400, l'extrémité 312 de la palette 300 est maintenant placée en regard de la rampe 470. n d'autres termes, lorsque la bobine 700 est alimentée par l'intermédiaire du commutateur auxiliaire 800, la seconde position du tiroir 400 correspond à une position stable.

Le retour du tiroir de contact 400 en position de repos telle qu'illustrée sur la figure 12 peut être obtenu à distance par ouverture du commutateur auxiliaire 800.

En effet, dès que la bobine 700 cesse d'être alimentée le chariot 600 n'est plus maintenu en position de verrouillage éloignée de la paroi latérale 126 et le ressort 402 repousse le tiroir de contact 400, ainsi que le chariot 600, grâce à l'engagement du téton 455 dans le segment de verrouillage 614, en rapprochement de la paroi latérale 126.

Le commutateur est alors reporté dans la position illustrée sur la figure 12.

On peut également obtenir un retour du tiroir de contact 400 dans la première position de repos illustrée sur la figure 12 à l'aide d'une nouvelle translation du coulisseau de commande 200 en rapprochement du tiroir de contact 400, tel qu'illustré sur la figure 16.

On a en effet illustré sur celle-ci la position du coulisseau de commande 200 après un nouveau déplacement ù translation parallèlement à l'axe principal O en rapprochement du tiroir de contact 400, à l'encontre des ressorts 210, 212, à partir de la position illustrée sur la figure 15 précédemment décrite.

Lorsque l'extrémité 312 de la palette 300 vient en contact avec la rampe 470, la palette 300 est sollicitée à pivotement dans le sens opposé à celui obtenu précédemment lors du passage de la position représentée sur la figure 12 à la position représentée sur la figure 13. En effet, l'extrémité 312 de la palette 300 glisse alors sur la rampe 470. Ainsi, la palette 300 pivote dans le sens des aiguilles d'une montre selon la représentation des figures 12 à 16. L'extrémité 312 de la palette 300 tombe dans le fond de la rampe 470. La palette 300 applique alors sur le tiroir de contact 400 un couple de pivotement opposé à celui exercé par le ressort 424, qui repousse le téton 455 en dehors du segment de verrouillage 614 dans le segment principal 612 de la lumière 610. Le ressort 402, en liaison avec la palette 300, repousse alors brusquement le tiroir de contact 400 dans la position de repos illutrée sur la figure 16 (position identique à celle illustrée sur la figure 12).

Le téton 455 se déplace dans le segment principal 612 en éloignement du segment de verrouillage 614 et le plot de contact 450 est reporté en regard des plots 160 et 162 pour court-circuiter ceux-ci. Le circuit d'alimentation de l'éclairage code du véhicule automobile est à nouveau fermé.

La butée élastique 410 amortit l'arrêt du tiroir de contact 400.

Par contre, le chariot 600 est maintenu dans la position de verrouillage en éloignement de la paroi latérale 126 du boîtier. Lorsque le levier de commande associé au coulisseau 200 est relâché, le coulisseau de commande 200 est déplacé dans la position de repos en éloignement du tiroir de contact 400 par les ressorts 210 et 212, comme illustré sur la figure 12. La palette 300 reprend sa position de repos grâce à la sollicitation élastique du resort 350.

L'extrémité 312 de la palette est à nouveau placée en regard de la rampe 460 comme illustré sur la figure 12.

Le commutateur est prêt pour un nouveau cycle de fonctionnement en commençant par une commutation dans le sens éclairage code vers l'éclairage phare.

On remarquera que lors du passage de la position représentée sur la figure 15 (éclairage phare) à la position représentée sur la figure 16 (éclairage code) le couple de pivotement exercé par la palette 300 sur le tiroir 400 agissant dans le sens de l'éjection du téton 455 vers l'extérieur du segment de verrouillage 614 est dû au fait que à l'opposé de l'état représenté sur la figure 13, une génératrice passant par l'axe de pivotement 302 de la palette 300 et le centre du point de contact de l'extrémité 312 de la palette contre le fond de la rampe 470, dans la position représentée sur la figure 16, passe du côté de la lumière 610 par rapport au point de contact du galet 414 sur le boîtier 100.

Lorsque à partir de la position illustrée sur la figure 16 le coulisseau de commande est à nouveau rapproché du tiroir de contact 400 par le levier d'actionnement associé, le coulisseau 200 et le tiroir de contact repassent par les phases de déplacement illustrées sur les figures 13 et 14.

Dans une première phase, l'extrémité 312 de la palette 300 glisse sur la rampe 460 vers le fond de celle-ci. La palette est ainsi sollicitée à pivotement dans le sens contraire des aiguilles d'une montre selon l'illustration des figures 12 à 16. La progression du rapprochement du coulisseau de commande 200 vers le tiroir 400 à l'encontre de la sollicitation élastique des ressorts 210 et 212, déplace à nouveau le tiroir de contact 400 vers la seconde position en éloignement de la paroi latérale 126.

Au cours de ce déplacement du tiroir de contact 400 à translation parallèlement à l'axe auxiliaire Q, le téton 455 glisse dans le segment principal 612 de la lumière 610 vers le segment de verrouillage 614. On remarquera que comme indiqué précédemment en regard des figures 13 et 14, au cours de cette translation du tiroir 400 en éloignement de la paroi latérale 126, le ressort 424 exerce sur le tiroir 400 un couple de pivotement (dans le sens des aiguilles d'une montre selon la représentation des figures 12 à 16) qui sollicite le téton 455 contre la surface 616 de la lumière 610, qui débouche dans le segment de verrouillage 614. De même, la prolongation de la génératrice passant par l'axe de pivotement 302 et le centre du point de contact de l'extrémité 312 de la palette 300 sur le fond de la rampe 460 passe d'un côté du point de contact du galet 414 sur le boîtier 100 opposé au téton 455. Ainsi, la palette 300 exerce sur le tiroir de contact 400 un couple de pivotement agissant dans le même sens que le ressort 424. De ce fait, lorsque le téton 455 parvient en regard du segment de verrouillage 614 il est poussé dans celui-ci pour verrouiller le tiroir de contact 400 dans la position de travail illustrée sur les figures 14 et 15.

Si l'alimentation de la bobine 700 est toujours assurée, le téton 455 étant prisonnier dans le segment 614, le ressort 402 ne peut plus repousser le tiroir de contact 400 dans la position de repos illustrée sur la figure 12.

Le plot de contact 450 qui suit le tiroir de contact 400 court-circuite alors à nouveau la paire de contacts 162, 164. Si par contre l'alimentation de la bobine 700 à été interrompue entre le moment où le tiroir de contact 400 atteint la position de repos représentée sur la figure 14 et le moment où le tiroir de contact 400 atteint à nouveau la seconde position représentée sur la figure 14, bien que le téton 455 pénètre dans le segment de verrouillage 614 de la lumière 610, dans la mesure où le chariot 600 portant la lumière de verrouillage 610 n'est plus immobilisée en éloignement de la paroi latérale 126, par la bobine 700, la seconde position du tiroir de contact 400 correspond à une position instable et de ce fait le tiroir de contact 400 ainsi que le chariot 600 qui lui est lié par l'intermédiaire du téton 455, sont reportés en première position telle qu'illustrée sur la figure 12, par le ressort 402 dès que le levier d'actionnement du coulisseau de commande 200 est relâché.

En conclusion, le maintien du tiroir de contact 400 das la seconde position telle qu'illustrée sur les figures 14 et 15 ne peut être obtenu que lorsque le chariot 600 est maintenu en éloignement de la paroi latérale 126 par la bobine 700 alimentée.

Dès lors que la bobine 700 n'est plus alimentée la seconde position du tiroir de contact 400 illustrée sur les figures 15 et 16 correspond à une position instable.

De ce fait, lorsque la bobine 700 n'est pas alimentée, le tiroir de contact 400 est ramené en permanence dans la position de repos illustrée sur la figure 12 par le ressort 402.

Par contre, lorsque la bobine 700 est alimentée les déplacements successifs du coulisseau de commande 200 en rapprochement du tiroir de contact 400, assurent une commutation de ce dernier entre les deux positions représentées sur les figures 12 et 15 pour assurer une commutation séquentielle des feux du véhicule automobile entre la psition code et la position phare.

Enfin, une réinitialisation automatique du tiroir de contact vers la position de repos illustrée sur la figure 12, correspondant à une commande des feux du véhicule automobile en position code est obtenue dès lors que l'alimentation de la bobine 700 est interrompue puisque l'interruption de l'alimentation de la bobine 700 relâche le chariot 600 portant la lumière de verrouillage 610 coopérant avec le téton 455.

En variante en peut envisager de réaliser le téton 455 solidaire du chariot 600 coopérant avec la bobine 700 et de ménager la lumière de verrouillage 610 présentant le segment de verrouillage 614 et coopérant avec le téton 455 sur le tiroir de contact 400.

Dans ce cas, la réalisation de la lumière de verrouillage 610 doit être inversée par rapport aux dispositions précédemment décrites correspondant à la réalisation de la lumière de verrouillage 610 sur le chariot 600.

Plus précisément encore, dans le cas où la lumière de verrouillage 610 est prévue sur le tiroir de contact 400, le segment de verrouillage 614 doit être disposé à l'extrémité du segment principal 612 adjacente à la paroi latérale 126 du boîtier portant la butée élastique 410 contre laquelle le tiroir 400 vient en appui dans la position de repos sollicité par le ressort 402.

Par ailleurs, le segment 614 doit être orienté en éloignement du coulisseau de commande 200 et non point en rapprochement de celui-ci.

On va maintenant décrire la STRUCTURE DU SECOND MODE DE REALISATION ILLUSTRE SUR LES FIGURES 17 à 31

Pour l'essentiel le commutateur électrique illustré sur ces figures reprend le boîtier 100, le levier de commande 10, le coulisseau de commande 200, la palette 300, et le tiroir de contact 400 précités; il comprend de plus un tiroir de sélection d'éclairage 500 et une chape 650.

Le levier de commande 10 est supporté par une rotule 12. La rotule 12 est guidée à pivotement sur le chapeau 106 autour de deux axes orthogonaux 13, 15. L'axe 13 est parallèle à l'axe auxiliaire Q. L'axe 15 est parallèle à l'axe principal O.

La rotule 12 est solidaire d'un doigt 20. La doigt 20 s'étend sensiblement radialement par rapport à l'axe de pivotement 13. Le doigt 20 repose contre la surface supérieure 202 du coulisseau 200.

La palette 300 repose contre deux portées cylindriques 234, 236 centrées sur l'axe de pivotement 302, définies sur le coulisseau de commande 200, par l'intermédiaire de deux tourillons 308, 310. Le ressort 350 est formé par une lamelle élastique 350.

Comme illustré sur la figure 17 annexée, une tige 502 est engagée coaxialement dans le levier 10 et libre de rotation autour de l'axe 11 de ce dernier. La tige 502 est munie d'un doigt 504 excentré engagé dans une fourchette 506 solidaire du tiroir de sélection d'éclairage 500.

Celui-ci, qui est guidé à translation parallèlement à l'axe auxiliaire Q par le voile 120 et une nervure 121 solidaire du boîtier, est ainsi déplacé à translation lors de la rotation de la tige 502 autour de l'axe 11.

Le tiroir de sélection d'éclairage 500 porte de préférence deux plots de contact 550, 552 reposant contre des jeux de lamelles électriquement conductrices associées pour assurer au cours de son déplacement une sélection du mode d'éclairage, successivement en position arrêt, position veilleuse et position feux de route (soit alternativement code ou phare selon la position du tiroir de contact 400).

La chape 650 est formée pour l'essentiel d'une embase 652 et de deux ailes 654, 656.

La chape 650 vient reposer contre le rotule 12 au niveau de premières portées d'appui 662, 664, de secondes portées d'appui 666, 668 et de troisièmes portées d'appui 670, 672.

Les premières portées d'appui 662, 664 sont définies par des surfaces sphériques concaves complémentaires de la surface extérieure de la rotule 12. Les secondes portées d'appui 666, 668 sont définies par des calottes cylindriques concaves complémentaires de l'enveloppe de tourillons 17, 19 solidaires de la rotule 12. Les tourillons 17, 19 sont diamétralement opposés, coaxiaux entre eux et coaxiaux à l'axe 13. Enfin, les troisièmes portées d'appui 670, 672 sont définies par des surfaces planes parallèles aux axes principal et secondaire O et P.

Il résulte de la coopération ainsi définie entre la chape 650 et la rotule 12 que la chape 650 est liée à la rotule 12 lors de la rotation de celle-ci autour de l'axe 15. Par contre, la rotule 12 peut pivoter librement par rapport à la chape 650 autour de l'axe 13.

Bien entendu, la tige 502 de levier peut tourner autour de son axe longitudinal 11 par rapport à la rotule 12 et par rapport à la chape 650.

La chape 650 porte un plot de contact 680 reposant élastiquement contre des lamelles électriquement conductrices portées par le boîtier 100.

Au cours du déplacement à pivotement de la chape 650 autour de l'axe 15, le plot 680 relie des paires variables de lamelles pour commander alternativement l'alimentation des indicateurs de changement de directions du véhicule automobile.

Selon le mode de réalisation représenté sur les figures 2 et 3, il est prévu une butée élastique 410 par exemple en caoutchouc, portée par la paroi latérale du boîtier vers laquelle est sollicité, en position de repos, par le ressort 402, le tiroir de contact 400.

La demanderesse a constaté cependant que l'adjonction d'une telle butée élastique, destinée à limiter le bruit de fonctionnement, sur le boîtier, s'avère d'un coût non négligeable et complique les opérations d'assemblage du commutateur.

Pour cette raison, il es proposé une structure de guidage 170 solidaire de la paroi latérale 124 du boîtier vers laquelle est poussé le tiroir de contact 400 par le ressort 402. La structure de guidage 170 est conformée de telle sorte que lorsque le tiroir 400 est déplacé vers sa position de repos il contacte la structure de guidage 170 selon une incidence non normale.

Plus précisément encore la structure de guidage 170 définit une surface concave dirigée vers le tiroir de contact 400 et servant d'appui à celui-ci. Cette surface est délimitée par des génétrices parallèles à l'axe secondaire P. La surface concave précitée comprend à partir de la paroi latérale 124 du boîtier vers l'intérieur de celui-ci, une portion 172 cylindrique de révolution autour d'un axe parallèle à l'axe secondaire P suivie d'une portion 174 plane divergent par rapport au chapeau inférieur 108 du boîtier, contre lequel repose le tiroir de contact 400, vers l'intérieur du boîtier 100.

Cette surface concave, prévue sur la structure de guidage 170, est choisie avec un rayon légèrement supérieur à celui de la surface convexe en regard sur le tiroir de contact 400 afin que l'incidence initialement rasante de la butée 170 progresse vers une incidence quasi-normale jusqu'à une position d'équilibre mécanique du tiroir 400 sous l'effet conjugué des deux ressorts 402 et 424.

On rappellera que, comme expliqué précédemment, lorsque le tiroir de contact 400 est déplacé vers sa seconde position à l'encontre de la sollicitation élastique exercée par le ressort 402, le ressort 424 associé au plot de contact 450 exerce un couple de pivotement sur le tiroir 400. Ce couple de pivotement tend à écarter l'extrémité du tiroir portant le plot 450, du chapeau inférieur 108. Ainsi, lorsque le tiroir de contact 400 est reporté en position de repos telle qu'illustrée sur la figure 19 par le ressort 402, son extrémité portant le plot 450 vient dans un premier temps en appui contre le segment plan 174 de la structure de guidage 170 et ce selon une incidence non normale. De là, les pièces du commutateur, en particulier le tiroir de contact 400 et le boîtier 100, étant réalisées en matière plastique au moins légèrement déformable, le bruit de fonctionnement du commutateur occasionné lorsque le tiroir de contact 400 vient prendre appui sur la surface 174 est très limité. Ensuite, le tiroir de contact 400 glisse contre la surface 172 cylindrique. Il en résulte que le tiroir de contact 400 est déplacé vers le chapeau inférieur 108.

On va maintenant décrire la structure de la lamelle servant à la fonction appel phare. Cette lamelle qui porte la référence numérique 710 est représentée en détail sur la figure 27.

On rappelle que la fonction appel phare est commandée lorsque le coulisseau 200 est déplacé en rapprochement du tiroir de contact 400 sans toutefois déplacer ce dernier.

La fonction appel phare est réalisée lorsque la lamelle 710 relie deux lamelles référencées 712 et 714 sur la figure 27.

La lamelle 710 est porté par un doigt 250 solidaire du coulisseau de commande 200.

La lamelle 710 est formée par estampage d'une plaque en matériau électriquement conducteur et pliage. La lamelle 710 est donc monobloc.

Elle comprend pour l'essentiel un cadre formé de deux montants 720, 722 et deux traverses 724, 726.

Les montants 720, 722 parallèles entre eux sont pour l'essentiel parallèles à l'axe principal O. Les traverses 724, 726 parallèles entre elles, relient les montants 720, 722 et sont pour l'essentiel parallèles à l'axe auxiliaire Q.

La traverse 726 est prolongée au delà du montant 722 par une aile 728 portant un plot de contact 730 placé en regard de la lamelle 714 précitée.

Par ailleurs, le montant 720 est prolongé vers l'extérieur du cadre composé des montants 720, 722 et des traverses 724, 726 par une branche 732. Celle-ci comprend deux plis orthogonaux 734, 736 qui reposent en permanence contre le lamelle 712 précitée pour assurer une liaison électrique avec celle-ci et forme palier de pivotement pour la lamelle 710.

Le doigt 250 prévu sur le coulisseau 200 s'étend pour l'essentiel parallèlement à l'axe secondaire P. Il est placé à l'intérieur du cadre défini par les montants 720, 722 et les traverses 724, 726.

Plus précisément le doigt 250 repose contre la surface interne 728 de la traverse 724 la plus éloignée du chapeau inférieur 108 du boîtier portant la lamelle 714.

Le doigt 250 est sollicité en appui contre la surface interne 738 de la travers 724 par un ressort 252 intercalé entre le doigt 250 et la traverse 726. Le ressort 252 est maintenu par un télon 254 solidaire du doigt 250 et par un téton 740 solidaire de la traverse 726.

L'extrémité libre de l'aile 728 portant le plot de contact 730 comprend un prolongement 742 plié en éloignement du chapeau inférieur 108. Le prolongement 742 possède une enveloppe cylindrique centrée sur un axe parallèle à l'axe auxiliaire. Le prolongement 742 participe au guidage de la lamelle 710 lors de son pivotement sur la lamelle 712 en rapprochement et en éloignement de la lamelle 714.

On notera par ailleurs que la lamelle 710 ne peut glisser sur le doigt 250 en éloignement du coulisseau 200 parallèlement à l'axe secondaire P en raison de l'ergot 256 solidaire du doigt 250 et s'étendant sensiblement parallèlement à l'axe principal O en éloignement du chapeau inférieur 108.

La traverse 724 est ainsi emprisonnée entre le corps du coulisseau 200 et l'ergot 256 grâce à la sollicitation élastique exercée par le ressort 252.

Ainsi, pour faciliter l'assemblage du commutateur, la lamelle de contact 710 peut être préassemblée sur le coulisseau 200.

On notera par ailleurs à l'examen de la figure 27 annexée que, si, en position de repos, la traverse 724 supérieure de la lamelle 710 s'étend pour l'essentiel parallèlement à l'axe auxiliaire, la surface supérieure du doigt 250 solidaire du colisseau 200 est inclinée par rapport à la traverse 724. La surface supérieure du doigt 250 diverge par rapport à la traverse supérieure 724 en rapprochement du montant 720 portant la branche de pivotement 732.

Ainsi, comme illustré sur la figure 27 on obtient que la branche 732 portant les plis 734, 736 servant de palier d'articulation sur la lamelle 712, et la zone de contact définie entre le doigt 250 et la traverse 724 sont définies respectivement de part et d'autre de l'axe de sollicitation du ressort 252. De ce fait, le ressort 252 excerce sur la lamelle 710 un couple de pivotement permanent sollicitant les plis 734, 736 de la lamelle 710 contre la lamelle 712.

Par ailleurs, grâce à la disposition précitée on obtient que ces plis 734, 736 viennent en contact avec la lamelle 712, de façon certaine, avant que le plot 730 ne vienne en contact avec la lame 714.

Lorsque le coulisseau de commande 200 est déplacé en rapprochement du tiroir de contact 400 par pivotement de la rotule 12 autour de l'axe 13, le plot de contact 730 solidaire de la lamelle 710 vient reposer contre la lamelle 714. La force exercée par le plot de contact 730 sur la lamelle 714 est définie par le ressort 252. Ce ressort 252 est suffisamment souple pour définir une force de sollicitation constante.

Selon un autre aspect de l'invention, l'un au moins des voiles 120, 122 du boîtier est muni de languettes élastiques 180 aptes à limiter le déplacment du coulisseau 200 en éloignement du chapeau inférieure 108 sous l'effet de la sollicitation exercée par les ressorts 210, 212.

Ces languettes 180 s'étendent en éloignement du chapeau inférieur 108 et, au niveau de leur extrémité libre, opposée à ce dernier, font saillie vers l'intérieur de la chambre 128 recevant la coulisseau de commande 200 à translation.

Les languettes 180 peuvent fléchir élastiquement lorsque le coulisseau 200 équipé de la lamelle 710 précité est engagé entre les voiles 120, 122. Ultérieurement, les lamelles 180 reprennent élastiquement leur position de repos pour interdire le retrait du coulisseau de commande 200. Cette disposition permet de faciliter largement l'assemblage du commutateur en maintenant le coulisseau de commande 200 en position sur le corps de boîtier 100, sans adjonction d'éléments complémentaires séparés.

Pour ne pas perturber le fonctionnement du commutateur, la position de pré-assemblage du coulisseau de commande 200 définie par les languettes élastiques 180 est plus éloignée du chapeau inférieur 108 que celle obtenue après assemblage définitif du commutateur, lorsque le coulisseau de commande 200 repose contre le doigt 20 solidaire de la rotule 12.

On notera par ailleurs que selon le mode de réalisation représenté sur la figure 2 le tiroir de contact 400 repose contre le chapeau inférieur 108 par l'intermédiaire d'un galet 414 dont l'axe 420 est parallèle à l'axe secondaire P.

Selon le mode de réalisation représenté sur les figures 17 et 19, le galet 414 est cette fois porté à rotation sur le chapeau inférieur 108 lui-même. L'axe de rotation du galet 414 reste parallèle à l'axe secondaire P.

On va maintenant décrire la structure des moyens de rappel associés à la chape 650.

Celle-ci est indexée dans son mouvement autour de l'axe de rotation 15 par des poussoirs 659, équipés de galets 657 sollicités contre une surface d'indexation 190 définie sur le boîtier 100 par des ressorts associés 658.

La surface d'indexation 190 prévue sur le boîtier 100 définit diverses concavités dirigées vers l'axe de pivotement 15. Ces concavités définissent une position de repos pour la chape 650, telle qu'illustrée sur la figure 18. Elles définissent également deux positions de travail stables de la chape 650, lorsque celle-ci est déplacée alternativement dans le sens des aiguilles d'une montre et dans le sens contraire des aiguilles d'une montre autour de l'axe 15 selon la représentation de la figure 18. Ces positions stables correspondant à deux positions respectives d'alimentation des indicateurs de changement de direction du véhicule automobile.

Pour sortir de ces positions stables de travail et revenir en position de repos, telle qu'illustrée sur la figure 18, l'opérateur peut opérer un effort de sens appropié sur le levier de commande 10 pour ramener les galets d'indexation 657 dans la position illustrée sur la figure 18.

La chape 650 peut également être ramenée en position de repos telle qu'illustrée sur la figure 18 grâce à une biellette 900 entraînée selon des modalités classiques en soi par la rotation du volant du véhicule automobile.

En position de repos, la biellette 900 s'étend sensiblement parallèlement à l'axe secondaire P. Elle est munie de part et d'autre de deux tourillons 902, 904. Les tourillons 902, 904 s'étendant pour l'essentiel parallèlement à l'axe principal O.

La biellette 900 est munie de structures latérales d'accrochages 906, 908. Ces structures d'accrochage coopèrent avec des ressorts de traction 910, 912, par ailleurs en prise avec le boîtier. Les ressorts 910, 912 exercent sur la biellette 900 des forces dont la résultante est pour l'essentiel parallèle à l'axe secondaire P et dirigée à l'opposé de la rotule 12.

La tourillon inférieur 902 solidaire de la biellette 900 est engagé dans une ouverture 690 ménagée dans la face supérieure de l'embase 652 de la chape 650, comme illustré sur la figure 30.

L'ouverture 690 est délimitée au moins partiellement par une bordure en forme de W possédant une pointe centrale 692 dirigée vers l'axe de pivotement 15 et deux concavités latérales 694, 696 symétriques, dirigées également vers l'axe 15.

La pointe 692 de l'ouverture 690 est plus rapprochée de l'axe 15 que le fond des deux concavités latérales 694, 696 précitées.

Le tourillon supérieur 904 est engagé dans une ouverture oblongue 952 ménagée dans une pièce 950.

En position de fonctionnement normale la direction d'élongation de l'ouverture oblongue 952 s'étend parallèlement à l'axe secondaire P et coïncide avec le plan de symétrie longitudinale du commutateur référencé XVII—XVII sur la figure 18. On notera que la pointe 692 de l'ouverture 690 ménagée dans la chape coïncide également avec ce plan de symétrie XVII—XVII lorsque la chape est placée en position de repos telle qu'illustrée sur les figures annexées.

Lorsque la chape 650 est déplacée à pivotement autour de l'axe 15 l'une des concavités 694, 696 de l'ouverture 690 vient en position sous-jacente à l'ouverture 952. Le tourillon inférieur 902 glisse alors dans l'ouverture 690 contre le fond de l'une des concavités 694, 696 tandis que le tourillon supérieur 904 coulisse dans l'ouverture oblongue 952 en éloignement de l'axe de pivotement 15. L'un des indicateurs de changement de direction est alors alimenté.

De façon classique en soi, la colonne de direction reliée au volant du véhicule automobile porte une structure coopérant avec la biellette 900.

Cette structure est telle que lorsque le volante est entraînè dans un premier sens de rotation de biellette 900 est entraînée à pivotement autour de l'axe des tourillons 902, 904 pour venir en appui contre des butées latérales solidaires de la chape 650, sur l'extérieur de l'ouverture 690 pour ramener la chape 650 dans la position de repos illustrée sur les figures annexées.

Par contre, lorsque le volant est entraîné dans le second sens de rotation la biellette 900 peut pivoter librement autour de l'axe des tourillons 902, 904 sans venir en appui contre les butées précitées solidaires de la chape 650.

Ces modalités classiques en soi en seront pas décrites plus en détail par la suite.

On notera néanmoins que la pièce 950 portant l'ouverture oblongue 952 est susceptible de déplacement par rapport au corps du boîtier 100. Cette disposition, également classique pour l'homme de l'art, est prévue pour éviter de détériorer la biellette 900 ou un élément lié à celle-ci lorsque l'opérateur maintient la chape 650 en position pivotée autour de l'axe 15 pour alimenter en permanence les indicateurs de changement de direction, alors que l'entraînement du volant tendrait à forcer le retour en position de repos de la chape 650 par l'intermédiaire de la biellette 900.

Selon le mode de réalisation illustré sur les figures annexées, la pièce 950 est munie d'une chambre 954 généralement quadrangulaire.

Cette chambre est munie sur ces deux faces latérales 956, 958 en regard et symétriques par rapport au plan de symétrie XVII—XVII précité de protubérances 960, 962.

Ces protubérances 960, 962 possédent une enveloppe tronconique effilée vers le plan de symétrie XVII—XVII mais sont par ailleurs biseautées axialement. En d'autres termes, l'enveloppe des protubérances 960, 962 est d'allure tronconique, de révolution sur un angle de 180°.

Les protubérances 960, 962 solidaires de la pièce mobile 950 sont, à l'utilisation accolées contre des protubérances symétriques référencées 192, 194 solidaires du chapeau supérieur 106. Ainsi, les paires de protubérances 962 et 192 d'une part, 960 et 194 d'autre part forment en coopération des tétons tronconiques.

Un ressort en hélice 198 s'étendant sensiblement parallèlement à l'axe auxiliaire Q est engagé sur les tétons précités.

L'homme de l'art comprendra aisément que le ressort 198 supporte élastiquement la pièce 950 sur le chapeau 106 afin d'une part d'autoriser un déplacement relatif de la pièce 950 par rapport au boîtier 100 et d'autre part, de maintenir la pièce 950 contre le chapeau 106.

Cette dernière disposition s'avère particulièrement avantageuse pour faciliter l'assemblage du commutateur conforme à l'invention.

On va maintenant décrire la variante de réalisation des MOYENS DE VERROUILLAGE DU TIROIR DE CONTACT ILLUSTRES SUR LES FIGURES 32 à 37.

Ces moyens comprennent un tiroir de contact référencé 400 et un chariot référencé 600. Le tiroir de contact 400 et le chariot 600 sont placés respectivement de part de d'autre du voile 120. Le voile 120 est muni d'une ouverture 121 dont la géometrie sera décrite plus en détail par la suite.

Sur sa face 413 adjacente au voile 120 le tiroir de contact 400 est muni d'un organe de verrouillage 455. Ce dernier qui fait saillie sur la face 413 précitée traverse l'ouverture 121 pour coopérer avec le chariot 600.

Pour l'essentiel, la face de l'ouverture 121 qui est dirigée vers le fond 108 du boîtier sur lequel repose le tiroir de contact 400 par l'intermédiaire de son plot de contact 450 est formée de trois segments 170, 171, 172. Le tiroir de contact 400 prend successivement appui sur ces segments 170, 171, 172 par l'intermédiaire de l'organe de verrouillage 455, lors de son déplacement de la position de repos vers sa seconde position.

Le premier segment 170 s'étend pour l'essentiel parallèlement à l'axe auxiliaire Q. Le seconde segment 171 diverge par rapport au fond 108 du boîtier, en éloignement du premier segment 170. Enfin, le troisième segment 172 s'étend également sensiblement parallèlement à l'axe auxiliaire Q.

Le chariot 600 porte une lamelle 630 en matériau ferromagnétique adaptée pour coopérer avec une bobine 700 supportée fixe par le boîtier 100.

Le chariot 600 possède un doigt 648 sur lequel vient buter l'organe de verrouillage 455 lorsque le tiroir de contact 400 est déplacé vers sa seconde position. Le doigt 648 s'étend pour l'essentiel parallèlement à la direction de translation du coulisseau, soit parallèlement à l'axe principal O, entre l'organe de verrouillage 455 et la bobine 700.

Le chariot 600 possède par ailleurs un organe de verrouillage 640 apte à coopérer avec l'organe de verrouillage 455 solidaire du tiroir de contact 400.

Pour l'essentiel, l'organe de verrouillage 640 ménagé sur le chariot 600 comprend une surface 641 s'étendant transversalement à l'axe auxiliaire Q. Cette surface 641 fait saillie sur la surface 642 du chariot 600 qui est dirigée vers le fond 108 du boîtier et débouche sur une surface 643 parallèle à la direction de translation du tiroir 400 et donc orthogonale à l'axe principal O. La surface 693 fait face au fond 108 du boîtier.

La surface 641 précitée ménagée sur le chariot 600 est dirigée vers la bobine de verrouillage 700.

L'organe de verrouillage 455 prévu sur le tiroir de contact 400 est muni d'une surface de verrouillage 456 destinée à coopérer avec la surface de verrouillage 641 précitée. La surface de verrouillage 456 s'étend transversalement à l'axe auxiliaire Q. Elle est dirigée à l'opposé de la bobine 700. Enfin, elle débouche sur la surface 457 de l'organe de verrouillage 455 opposée au fond 108 du boîtier et généralement orthogonale à l'axe principal O.

La bobine 700 est placée sur un noyau en matériau ferromagnétique 702 s'étendant parallèlement à l'axe auxiliaire Q, en regard du chariot 600.

De préférence, la lamelle 630 est susceptible de débattement sur le chariot 600 de telle sorte que la lamelle 630 puisse être plaquée étroitement contre la face transversale 704 du noyau 702 afin de réduire de façon optimale l'entrefer entre le noyau 702 et la lamelle 630, comme évoqué précédemment en regard des figures 9 à 11.

On va maintenant décrire le fonctionnement du commutateur incorporant les moyens illustrés sur les figures 32, 33 et 34 en regard des figures 35, 36 et 37.

Sur la figure 35 le commutateur est représenté en position de repos.

Le coulisseau de commande 200 est sollicité en éloignement du tiroir de contact 400 par les ressorts 210, 212. L'extrémité 312 de la palette 300 est éloignée du tiroir de contact 400. Elle est placée en regard de la rampe 460. Le tiroir de contact 400 est poussé par le ressort 402 en position de repos. Le plot de contact 450 court-circuite deux lamelles de contact portées par le boîtier permettant avantageusement de fermer le circuit d'alimentation de l'éclairage code du véhicule automobile.

Le ressort 424 associé au plot de contact 450 pousse la surface 457 de l'organe de verrouillage 455 porté par le tiroir de contact 400, contre le premier segment 170 de l'ouverture 121 ménagée dans le voile 120.

Par ailleurs, le chariot 600 est éloigné de la bobine 700. La lamelle 630 est donc éloignée du noyau 702.

On a représenté sur la figure 36 la position du tiroir de contact 400 et du chariot 600 après déplacement du coulisseau de commande 200 pour assurer la commutation de l'éclairage code vers l'éclairage phare. Le déplacement du tiroir de contact 400 parallèlement à l'axe auxiliaire Q, à la suite du déplacement du coulisseau de commande 200 parallèlement à l'axe principal O est induit par la palette 300 qui glisse sur la rampe 460 selon des modalités décrites précédemment.

On notera que au cours de son déplacement à translation, de la position de repos illustrée sur la figure 35 vers la seconde position illustrée sur la figure 36, l'organe de verrouillage 455 prévue sur le tiroir de contact 400 vient en appui contre le doigt de commande 648 solidaire du chariot 600. De plus, au cours de ce déplacement l'organe de verrouillage 455 solidaire du tiroir de contact 400 repoussé par le ressort 424, glisse sur le second segment 171 de l'ouverture 121 et atteint le troisième segment 172 en fin de déplacement. On obtient alors un déplacement relatif du tiroir de contact 400 et du chariot 600, parallèlement à l'axe principal O, pour porter en regard les surfaces de verrouillage 456 et 641 prévues respectivement sur ces éléments. En effet, alors que le chariot 600 reste à distance constante du fond 108 du boîtier puisqu'il glisse sur une toile 101 du boîtier parallèle au fond 108, lors du déplacement de la position de repos (figure 35) vers la second position (figure 36) le tiroir de contact 400 est repoussé en éloignement du fond 108 du boîtier par le ressort 424. L'amplitude du déplacement du tiroir de contact 400 en éloignement du fond 108 du boîtier correspond à la différence d'altitude des premier et troisième segments 170, 172 de l'ouverture 121 par rapport au fond 108 du boîtier.

Lorsque le tiroir de contact 400 atteint la seconde position illustrée sur la figure 36 la lamelle 630 solidaire du chariot 600 vient reposer cntre le noyau 702 associé à la bobine 700. On rappellera que, au cours de la translation du tiroir 400 vers la seconde position illustrée sur la figure 36 le ressort 424 associé au plot 450 exerce sur le tiroir 400 un couple de pivotement que sollicite l'organe de verrouillage 455 contre le troisième segment 172 de l'ouverture 121. De même, la prolongation de la génératrice passant par l'axe de pivotement 302 et le centre du point de contact de l'extrémité 312 de la palette 300 sur la rampe 460 passe d'un côté de l'axe du galet 414 opposé à l'organe de verrouillage 455. Ainsi, la palette 300 exerce également sur le tiroir de contact 400 un couple de pivotement agissant dans le même sens que le ressort 424.

Lorsque la force exercée sur le levier de commande du commutateur est relâchée le ressort 402 repousse la surface de verrouillage 456 de l'organe 455 contre la surface 641 du chariot 600.

Dans la seconde position du tiroir de contact 400, illustrée sur la figure 36, le plot de contact 450 court-circuite une autre paire de lamelles de contacts électriques. La liaison électrique entre cette paire de lamelles permet de fermer le circuit d'alimentation de l'éclairage phare du véhicule automobile.

Sil la bobune électrique 700 n'est pas alimentée, lorsque le levier commandant le déplacement du coulisseau 200 est relâché, le tiroir de contact 400 est repoussé dans la position de repos illustrée sur la figure 35 par le ressort 402. Le chariot 600 suit le tiroir de contact 400 et est reporté en position de repos illustrée sur la figure 35 par l'organe de verrouillage 455.

Pour cela, en position de repos, la surface 643 du chariot 600 sur laquelle débouche la surface de verrouillage 641 affleure le premier segment 170 de l'ouverture 121. De plus, en position de repos du chariot 600, telle qu'illustrée sur la figure 35, la surface de verrouillage 641 qui est transversale à l'axe auxiliaire Q coïncide avec la zone d'intersection des premier et second segments 170, 171 de l'ouverture 121.

En d'autres termes, si la bobine 700 n'est pas alimentée lorsque le chariot 600 a atteint la seconde position illustrée sur la figure 46, et que le levier de commande du commutateur est relâché, la surface de verrouillage 456 du tiroir de contact 400 reste en appui contre la surface de verrouillage 641 du chariot 600 jusqu'à ce que l'organe de verrouillage 455 atteigne le premier segment 170 de l'ouverture 121. Ainsi, lorsque la surface de verrouillage 456 échappe à la surface de verrouillage 641 le chariot 600 est reporté en position de repos telle qu'illustrée sur la figure 35.

Il apparaît par conséquent que si la bobine 700 n'est pas alimentée la position d'éclairage phare illustrée sur la figure 36 correspond à une position instable. Par contre, si la bobine 700 est alimentée le chariot de verrouillage 600 est maintenu en position et sert de butée au tiroir de contact. La position d'éclairage phare illustré sur la figure 36 correspond alors à une position stable. Le coulisseau 200 étant repoussé en position de repos éloignée du tiroir de contact 400 par les ressorts 210 et 212, la palette 300 est alors placée en regard de la seconde rampe 470.

Le retour du tiroir de contact en position de repos telle qu'illustrée sur la figure 35 peut être obtenu à distance par ouverture du commutateur associé à la bobine 700. En effet, dès que la bobine 700 cesse d'être alimentée le chariot 600 n'est plus maintenu en position de verrouillage telle qu'illustrée sur la figure 36 et le ressort 402 repousse le tiroir de contact 400, ainsi que le chariot 600, grâce à l'engagement des surfaces de verrouillage 456, 641, en position de repos telle qu'illustrée sur la figure 35.

On peut également obtenir un retour du tiroir du contact 400 dans la première position de repos, ù l'aide d'une nouvelle translation du coulisseau de commande 200 en rapprochement du tiroir de contact 400. En effet, lorsque l'extrémité 312 de la palette 300 vient en contact avec la rampe 470, la palette 300 exerce sur le tiroir de contact 400 un couple de pivotement opposé à celui exercé par le ressort 424. Le couple de pivotement exercé par la palette 300 repousse l'organe de verrouillage 455 en éloignement du troisième segment 172 de l'ouverture 121, soit en rapprochement du fond 108 du boîtier de telle sorte que la surface de verrouillage 456 échappe à la surface de verrouillage 691 prévue sur le chariot 600. Là encore, le ressort 402, en liaison avec la palette 300 repousse alors brusquement le tiroir de contact 400 dans la position de repos.

Le circuit d'alimentation de l'éclairage code du véhicule automobile est alors à nouveau fermé par l'intermédiaire du plot de contact 450.

Par contre, le chariot 600 est maintenu dans la position de verrouillage, contre la bobine 700 comme illustré sur la figure 37.

Lors d'un actionnement ultérieur du coulisseau de commande 200 en rapprochement du tiroir de contact 400, celui-ci est déplacé à nouveau parallèlement à l'axe auxiliaire Q en rapprochement de la bobine 700. Si celle-ci est toujours alimentée la chariot 600 sert de verrouillage au tiroir de contact 400. Le tiroir de contact 400 et le chariot 600 occupent alors la position stable illustré sur la figure 36.

Par contre, si l'alimentation de la bobine 700 a été interrompue avant que le tiroir de contact 400 soit à nouveau déplacé, le ressort 402 repousse le tiroir de contact 400 et le chariot 600, grâce à la coopération des surfaces de verrouillage 456, 691 dès que le levier de commande du commutateur est relâché.

En conclusion, le maintien du tiroir de contact 400 dans la seconde position telle qu'illustrée sur la figure 36, correspondant à l'alimentation des phares du véhicule automobile, ne peut être obtenu que lorsque le chariot 600 est maintenu contre le noyau 702 de la bobine 700, c'est-à-dire lorsque la bobine 700 est alimentée.

Dès lors que la bobine 700 n'est plus alimentée la seconde position du tiroir de contact 400 illustrée sur la figure 36 correspond à une position instable.

De ce fait, lorsque la bobine 700 n'est pas alimentée, le tiroir de contact 400 est ramené en permanence dans la position de repos illustrée sur la figure 35, par le ressort 402.

Par contre, lorsque la bobine 700 est alimentée, les déplacements successifs du coulisseau de commande 200 en rapprochement du tiroir de contact 400, assurent une commutation de ce dernier entre les deux positions représentées sur les figures 36 et 37 pour assurer une commutation séquentielle des feux du véhicule automobile entre la position code et la position phare.

On notera que, grâce aux dispositions précédemment décrites, dans la position de repos illustrée sur la figure 35 le tiroir de contact 400 occupe toujours les mêmes positions par rapport au fond 108 du boîtier.

De même, dans la seconde position illustré sur la figure 36, le tiroir de contact 400 est situé toujours à la même altitude par rapport du fond 108 du boîtier 100.

Ainsi, la pression exercée par le plot de contact 450 sur les lamelles de contact associées est toujours la même lorsque le tiroir de contact 400 est placé en position de repos telle qu'illustrée sur la figure 35.

De façon similaire, la pression exercée par le plot de contact 450 sur les lamelles de contact associées, lorsque le tiroir 400 est dans la seconde position illustrée sur la figure 36, si elle diffère de la pression exercée en position de repos, est néanmoins toujours constante.

## Revendications

1. Commutateur bi-stable, en particulier pour la commande de l'éclairage code/phare d'un véhicule automobile, du type comprenant:
   un boîtier (100) qui loge
   un coulisseau de commande (200) guidé à translation (O) entre une position de repos et une position de travail,
   une palette (300) s'étendant dans la direction de déplacement du coulisseau, portée sur le coulisseau de commande de manière à pouvoir pivoter par rapport à celui-ci autour d'un axe (302) transversal à la direction de translation du coulisseau, et
   un tiroir de contact (400) susceptible de déplacement dans une direction générale (Q) perpendiculaire à la direction (O) de déplacement du coulisseau et à l'axe de pivotement (302) de la palette (300), muni
   d'au moins un plot de contact (450), caractérisé par le fait qu'il est prévu:
   Deux rampes (460, 470) ménagées sur une face commune du tiroir en regard de la palette (300), telles que lesdites rampes (460, 470) soient placées alternativement en regard de la palette (300) selon la position du tiroir dans le boîtier.

2. Commutateur bi-stable selon la revendication 1, caractérisé par le fait que le tiroir de contact (400) est susceptible de déplacement entre deux positions et sollicité élastiquement vers une position de repos.

3. Commutateur bi-stable selon l'une des revendications 1 et 2, caractérisé par le fait que le tiroir de contact (400) porte un téton (455) en saillie perpendiculairement à sa direction de déplacement (Q), pénétrant dans une lumière (144) ménagée dans le boîtier ou un élément lié à celui-ci, qui comporte au moins un segment (150) de verrouillage parallèle à la direction de déplacement (O) du coulisseau.

4. Commutateur bi-stable selon la revendication 3, caractérisé par le fait qu'il comporte un élément de déverrouillage apte à recouvrir le segment (150) de la lumière (144) qui s'étend parallèlement à la direction de déplacement (O) du coulisseau.

5. Commutateur bi-stable selon la revendication 4, caractérisé par le fait que l'élément de déverrouillage est mobile et commandé à déplacement entre une position dans laquelle il recouvre le segment (150) de la lumière qui s'étend parallèlement à la direction de déplacement (O) du coulisseau et une position dans laquelle ilne recouvre pas ce segment.

6. Commutateur bi-stable selon l'une des revendications 1 à 5, caractérisé par le fait que la palette (300) est sollicitée élastiquement vers une position de repos dans laquelle la palette (300) s'étend parallèlement à la direction de translation (O) du coulisseau.

7. Commutateur bi-stable selon l'une des revendications 1 à 6, caractérisé par le fait que le coulisseau de commande est sollicité élastiquement vers la position de repos éloignée du tiroir de contact.

8. Commutater bi-stable selon l'une des revendications 1 à 7, caractérisé par le fait que sur sa surface opposé au coulisseau de commande (200), le tiroir de contact (400) possède deux zones d'appui (414, 454) contre le boîtier (100) ou un élément lié à celui-ci, dont un plot de contact (450).

9. Commutateur bi-stable selon l'une des revendications 1 à 8, caractérisé par le fait que la course du tiroir de contact (400) et la position des rampes (460, 470) sur le tiroir sont telles que selon la position du tiroir (400) dans le boîtier, les génératrices passant par l'axe de pivotement (302) de la palette (300) et respectivement l'un ou l'autre des fonds des rampes (460, 470) contre lesquels vient en appui l'extrémité (312) de la palette passent respectivement de part et d'autre d'un point d'appui (414) du tiroir de contact (400) contre le boîtier (100) ou un élément lié à celui-ci, au niveau d'une face (412) du tiroir (400) opposée au coulisseau (200).

10. Commutateur bi-stable selon l'une des revendications 1 à 9, caractérisé par le fait qu'un organe élastique (424) sollicite le téton (455) vers le segment de verrouillage (150) de la lumière prévue dans le boîtier.

11. Commutateur bi-stable selon la revendication 10, caractérisé par le fait que l'organe élastique sollicite le plot de contact (450) vers l'extérieur du tiroir (400) contre des éléments de contact électrique portés par le boîtier.

12. Commutateur bi-stable selon l'une des revendications 1 à 11, caractérisé par le fait que le tiroir de contact (400) est susceptible de déplacement entre deux positions, que des moyens (402) sollicitent élastiquement le tiroir (400) vers une première position et que le boîtier (100) comprend une structure (170) de guidage conformée de telle sorte que lorsque le tiroir (400) est déplacé vers la première position il contacte la structure de guidage (170) selon une incidence non normale.

13. Commutateur selon la revendication 12, caractérisé par le fait que la structure de guidage (170) comprend une surface (172) d'allure cylindrique.

14. Commutateur bi-stable selon la revendication 13, caractérisé par le fait que le surface cylindrique (172) de la structure de guidage (170) est cylindrique de révolution autour d'un axe transversal à la direction de déplacement du tiroir de contact (400).

15. Commutateur bi-stable selon l'une des revendications 12 à 14, caractérisé par le fait que lorsque le tiroir est déplacé vers la première position il contact initialement la structure de guidage (170) selon une incidence non normale qui évolue par la suite vers une incidence normale.

16. Commutateur bi-stable selon l'une des revendications 1 à 15, caractérisé par le fait qu'i comprend en outre une lamelle (710) électriquement conductrice supportée par le coulisseau de commande (200) et un ressort (252) intercalé entre la lamelle (710) et le coulisseau (200), de telle sorte que lorsque le coulisseau (200) est déplacé vers sa position de travail il sollicite la lamelle (710) en appui contre un plot (714) électriquement conducteur avec une force constante déterminée par le ressort (252).

17. Commutateur bi-stable selon la revendication 16, caractérisé par le fait que la lamelle (710) comprend un cadre composé de deux montants (720, 722) et deux traverses (724, 726), le coulisseau de commande (200) comprenant un doigt (250) qui repose contre la surface interne de l'une des traverses (724), le ressort (252) étant intercalé entre le doigt (250) et l'autre traverse (726).

18. Commutateur bi-stable selon la revendication 17, caractérisé par le fait que l'un des montants (720) comprend un prolongement qui repose contre une lame (712) fixe solidaire du boîtier afin d'une part, de définir un contact électrique permanent entre la lamelle (710) et la lame (712) et d'autre part, de définir une articulation de la lamelle (710) par rapport à la lame (712).

19. Commutateur bi-stable selon l'une des revendications 17 ou 18, caractérisé par le fait que l'une des traverses (726) porte un plot (730) électriquement conducteur.

20. Commutateur bi-stable selon la revendication 18, caractérisé par le fait que les zones d'appui d'une part, de la lamelle (710) contre la lame (712) et d'autre part, de la lamelle (710) contre le doigt (250) solidaire du coulisseau (200) sont disposées respectivement de part et d'autre de l'axe du ressort associé (252).

21. Commutateur bi-stable selon l'une des revendications 16 à 20, caractérisé par le fait que la lamelle (710) est utilisée pour assurer des appels phare lors du déplacement du coulisseau de commande (200) vers sa position de travail.

22. Commutateur bi-stable pour la commande de l'éclairage d'un véhicule automobile selon l'une des revendications 1 à 21, caractérisé par le fait que le boîtier comprend des languettes (180) aptes à maintenir le coulisseau (200) en position pré-assemblée sur le boîtier.

23. Commutateur bi-stable selon l'une des revendications 1 à 22, caractérisé par le fait qu'il comprend de plus une rotule (12) montée à rotation sur le boîtier (100) autour de deux axes orthogonaux (13, 15), la rotation de la rotule (12) autour d'un premier axe (131) entraînant à translation le coulisseau de commande (200) entre la position de repos et la position de travail, une chape (650) liée à la rotule (12) lors de sa rotation autour du second axe (15), pour commander les indicateurs de changement de direction du véhicule, le retour de la chape en position de repos étant contrôlé par une biellette (900) guidée à pivotement et à translation sur une pièce (950) susceptible de débattement par rapport au boîtier (100), le boîtier (100) et la pièce (950) comprenant chacun une paire de protubérances (960, 962; 192, 194) en forme de demi-tronc de cône, accolés deux à deux pour former des supports tronconiques sur lesquels sont engagés respectivement les extrémités d'un ressort (198).

24. Commutateur bi-stable selon l'une des revendications 1 à 23, caractérisé par le fait que le tiroir (400) roule sur un galet porté par le boîtier (100).

25. Commutateur bi-stable selon l'une des revendications 1 à 24, caractérisé par le fait que le tiroir de contact (400) est susceptible de déplacement entre deux positions, que des moyens (402) sollicitent élastiquement le tiroir vers une première position et qu'il est prévu des moyens de verrouillage (455, 610, 600, 700) à commande électromagnétique, pour maintenir sélectivement le tiroir (400) dans la seconde position lorsqu'il est déplacé dans celle-ci par la palette (300) associée au coulisseau (200).

26. Commutateur bi-stable selon la revendication 25, caractérisé par le fait que les moyens de verrouillage comprennent une bobine électrique (700) alimentée sélectivement par un commutateur auxiliaire (800) associé et un chariot (600) portant un organe de verrouillage et déplaçable par le tiroir (400) entre une position de repos correspondant à la première position du tiroir (400) et une position de verrouillage correspondant à la seconde position du tiroir (400), le chariot (600) étant maintenu en position de verrouillage lorsque la bobine (700) est alimentée.

27. Commutateur bi-stable selon la revendication 26, caractérisé par le fait que les moyens de verrouillage comprennent deux organes de verrouillage formés respectivement d'un téton (455) s'étendant perpendiculairement à la direction de déplacement du tiroir de contact (400) et une lumière (610) recevant le téton (455), qui comporte au moins un segment de verrouillage (614) s'étendant parallèlement à la direction de déplacement du coulisseau, l'un des organes de verrouillage étant prévu sur le tiroir de contact (400), tandis que l'autre organe de verrouillage (610) est prévu sur le chariot (600).

28. Commutateur bi-stable selon la revendication 27, caractérisé par le fait que le téton (455) est solidaire du tiroir de contact (400), tandis que la lumière (610) est ménagée dans le chariot (600).

29. Commutateur bi-stable selon l'une des revendications 25 à 28 prise en combinaison avec la revendication 26, caractérisé par le fait que le tiroir de contact (400) et le chariot (600) sont guidés à translation parallèlement.

30. Commutateur bi-stable selon l'une des revendications 25 à 29, combinée avec la revendication 27, caractérisé par le fait que la lumière (610) possède d'une part, un segment principal (612) qui s'étend généralement dans la direction de translation du tiroir de contact (400) et, d'autre part, le segment de verrouillage (614) qui s'étend perpendiculairement à la direction de déplacement du tiroir (600).

31. Commutateur bi-stable selon la revendication 30, caractérisé par le fait que le segment de verrouillage (614) est placé à une extrémité du segment principal (612).

32. Commutateur bi-stable selon l'une des revendications 1 à 31, caractérisé par le fait que le tiroir de contact (400) est susceptible de déplacement entre deux positions, des moyens (402) sollicitent élastiquement le tiroir (400) vers une première position et il est prévu des moyens de verrouillage à commande électromagnétique (700, 600, 170, 171, 172) pour maintenir sélectivement le tiroir (400) dans la seconde position lorsqu'il est déplacé dans celle-ci par la palette (300) associée au coulisseau (200), les moyens de verrouillage comprenant une bobine électrique (700) alimentée sélectivement par un commutateur auxiliaire associé, un chariot (600) portant un premier organe de verrouillage (641) coopérant avec un seconde organe de verrouillage (456) prévu sur le tiroir de contact (400), le chariot étant déplaçable par le tiroir (400) parallèlement au déplacement de celui-ci entre une position de repos correspondant à la première position du tiroir et une position de verrouillage correspondant à la seconde position du tiroir, le chariot (600) étant maintenu en position de verrouillage lorsque la bobine (700) est alimentée, et une rampe (171) contrôlant un déplacement relatif du tiroir de contact (400) et du chariot (600) perpendiculairement à la direction de déplacement du tiroir de contact (400), lorsque le tiroir est déplacé de la première position vers la seconde position pour porter en prise les organes de verrouillage (641, 456) prévus sur le tiroir de contact (400) et le chariot (600).

33. Commutateur bi-stable selon la revendication 32, caractérisé par le fait que le premier organe de verrouillage (641) prévu sur le chariot (600) et le seconde organe de verrouillage (456) prévu sur le tiroir de contact (400) comprennent des surfaces de verrouillage orthogonales à la direction de translation du tiroir (400).

34. Commutateur bi-stable selon l'une des revendications 32 ou 33, caractérisé par le fait que la rampe (171) contrôlant le déplacement relatif du tiroir de contact (400) et du chariot (600) est ménagée sur le boîtier (100).

35. Commutateur bi-stable selon la revendication 34, caractérisé par le fait que la rampe (171) est formée par le bord d'une ouverture (121) ménagée dans un voile (120) du boîtier (100).

36. Commutateur bi-stable selon la revendication 35, caractérisé par le fait que l'un des côtés de l'ouverture (121) ménagée dans un voile (120) du boîtier comprend trois segments (170, 171, 172): un premier segment orienté parallèlement à la direction de translation du tiroir (400), un second segment (171) formant ladite rampe, inclinée par rapport à la direction de translation du tiroir en divergeant par rapport à une paroi (108) servant d'appui au tiroir en éloignement du premier segment (170) et un troisième segment (172) orienté parallèlement à la direction de translation du tiroir.

37. Commutateur bi-stable selon les revendications 33 et 36 prises en combinaison, caractérisé par le fait que, en position de repos, la surface de verrouillage (641) prévu sur le chariot (600) coïncide avec l'intersection des premier et second segments (170, 171) du bord de l'ouverture (121) prévue dans un voile (120) du boîtier.

38. Commutateur bi-stable selon la revendication 37, caractérisé par le fait que la surface de verrouillage (641) prévue sur le chariot (600) débouche sur une surface (643) qui est coplanaire du premier segment.

39. Commutateur électrique selon l'une des revendications 32 à 38, caractérisé par le fait que le chariot (600) comprend un doigt de commande (640) servant du butée au tiroir porte contact (400) lorsque celui-ci est déplacé de sa position de repos vers la seconde position.

40. Commutateur bi-stable selon l'une des revendications 26 à 39, caractérisé par le fait que le chariot (600) possède une lamelle (630) en matériau ferromagnétique apte à coopérer avec la bobine (700) pour maintenir le chariot (600) en positoin de verrouillage lorsque la bobine (700) est alimentée.

41. Commutateur bi-stable selon la revendication 40, caractérisé par le fait que la lamelle (630) est supportée avec jeu par le chariot (600) pour se plaquer étroitement contre un noyau (702) introduit dans la bobine (700).

42. Commutateur bi-stable selon l'une des revendications 40 et 41, caractérisé par le fait que la lamelle (630) est pliée en U sous forme de deux branches (632, 634) généralement parallèles reliées par un pontet transversal (636) et montée à pivotement sur le chariot (600) par le pontet (636).

**Patentansprüche**

1. Schalter mit zwei stabilen Stellungen, insbesondere für die Steuerung des Abblend-/Fernlichts eines Kraftfahrzeugs, enthaltend:
ein Gehäuse (100), das aufnimmt:
einen Steuerschieber (200), der zwischen einer Ruhestellung und einer Arbeitsstellung verschiebbar (0) geführt ist,
einen Anker (300), der sich in der Verstellrichtung des Schiebers erstreckt, und auf dem Steuerschieber derart abgestützt ist, daß er gegenüber diesem um einen Achse (302) verschwenkbar ist, die quer zur Bewegungsrichtung des Schiebers verläuft, und
einen Kontaktschieber (400), der in einer zur Verschieberichtung (O) des Schiebers und zur Schwenkachse (302) des Ankers (300) querverlaufenden Richtung (Q) verstellbar ist und der mit wenigstens einem Kontaktstück (450) versehen ist,
dadurch gekennzeichnet, daß
zwei Rampen (460, 470) vorgesehen sind, die auf einer gemeinsamen Fläche des Kontaktschiebers gegenüber dem Anker (300) so ausgebildet sind, daß die genannten Rampen (460, 470) dem Anker (300) entsprechend der Stellung des Kontaktschiebers in dem Gehäuse abwechselnd gegenübergestellt werden.

2. Schalter mit zwei stabilen Stellungen nach Anspruch 1, dadurch gekennzeichnet, daß der Kontaktschieber (400) zwischen zwei Stellungen verstellbar und elastisch gegen eine Ruhestellung vorgespannt ist.

3. Schalter mit zwei stabilen Stellungen nach den Ansprüche 1 und 2, dadurch gekennzeichnet, daß der Kontaktschieber (400) einen Ansatz (455) trägt, der senkrecht zu seiner Verstellrichtung (Q) vorsteht und in ein in dem Gehäuse oder in einem damit verbundenen Element ausgebildetes Fenster (144) vorsteht, das wenigstens ein Verriegelungssegment (150) parallel zur Verstellrichtung (O) des Schiebers aufweist.

4. Schalter mit zwei stabilen Stellungen nach Anspruch 3, dadurch gekennzeichnet, daß er ein Entriegelungselement aufweist, das dazu eingerichtet ist, das Segment (150) des Fensters (144) zu bedecken, das sich parallel zur Verstellrichtung (O) des Schiebers erstreckt.

5. Schalter mit zwei stabilien Stellungen nach Anspruch 4, dadurch gekennzeichnet, daß das Entriegelungselement beweglich ist und zur Verstellung zwischen einer Stellung, in der es das Segment (150) des Fensters, das sich parallel zur Verstellrichtung (O) des Schiebers erstreckt, verdeckt, und einer Stellung, in der es dieses Segment nicht verdeckt, gesteuert ist.

6. Schalter mit zwei stabilen Stellungen nach einem der Ansprüche 1 bis 5, dadurch gekennzeichnet, daß der Anker (300) gegen eine Ruhestellung vorgespannt ist, in der der Anker (300) sich parallel zur Bewegungsrichtung (O) des Schiebers erstreckt.

7. Schalter mit zwei stabilen Stellungen nach einem der Ansprüche 1 bis 6, dadurch gekennzeichnet, daß der Steuerschieber elastisch gegen die Ruhestellung vorgespannt ist, die von dem Kontaktschieber entfernt ist.

8. Schalter mit zwei stabilen Stellungen nach einem der Ansprüche 1 bis 7, dadurch gekennzeichnet, daß auf der dem Steuerschieber (200) gegenüberliegenden Fläche der Kontaktschieber (400) zwei Zonen (414, 454) zur Anlage an dem Gehäuse (100) oder einem damit verbundenen Element besitzt, von denen eine das Kontaktstück (450) ist.

9. Schalter mit zwei stabilen Stellungen nach einem der Ansprüche 1 bis 8, dadurch gekennzeichnet, daß der Bewegungsweg des Kontaktschiebers (400) und die Position der Rampen (460, 470) auf dem Schieber derart sind, daß entsprechend der Stellung des Kontaktschiebers (400) in dem Gehäuse die erzeugenden, die durch die Schwenkachse (302) des Ankers und jeweils durch die eine oder andere der Sohlen der Rampen (460, 470), gegen die sich das Ende (312) des Ankers anlegt, verlaufen, jeweils zu beiden Seiten eines Anlagepunktes (414) des Kontaktschiebers (400) an dem Gehäuse (100) oder einem damit verbundenen Element in Höhe einer Fläche (412) des Kontaktschiebers (400) gegenüber dem Schieber (200) verlaufen.

10. Schalter mit zwei stabilen Stellungen nach einem der Ansprüche 1 bis 9, dadurch gekennzeichnet, daß ein elastisches Organ (424) den Ansatz (455) gegen das Verriegelungssegment (150) des in dem Gehäuse ausgebildeten Fensters drückt.

11. Schalter mit zwei stabilen Stellungen nach Anspruch 10, dadurch gekennzeichnet, daß das elastische Organ das Kontaktstück (450) am Ende des Kontaktschiebers (400) gegen elektrische Kontaktelemente drückt, die von dem Gehäuse gehalten werden.

12. Schalter mit zwei stabilen Stellungen nach einem der Ansprüche 1 bis 11, dadurch gekennzeichnet, daß der Kontaktschieber (400) zwischen zwei Stellungen verstellbar ist, daß Einrichtugen (402) den Kontaktschieber (400) elastische in eine erste Stellung drücken und daß das Gehäuse (100) eine Führungsstruktur (170) aufweist, die derart gestaltet ist, daß, wenn der Kontaktschieber (400) in die erste Stellung gebracht ist, er die Führungsstruktur (170) in einer nichtsenkrechten Neigung berührt.

13. Schalter mit zwei stabilen Stellungen nach Anspruch 12, dadurch gekennzeichnet, daß die Führungsstruktur (170) eine Fläche (172) zylindrischen Verlaufs aufweist.

14. Schalter mit zwei stabilen Stellungen nach Anspruch 13, dadurch gekennzeichnet, daß die zylindrische Fläche (172) der Führungsstruktur (170) um eine Achse drehzylindrisch ist, die quer zur Verstellrichtung des Kontaktschiebers (400) verläuft.

15. Schalter mit zwei stabilen Stellungen nach einem der Ansprüche 12 bis 14, dadurch gekennzeichnet, daß, wenn der Kontaktschieber in die erste Stellung gebracht wird, er anfänglich die Führungsstruktur (170) in einer nichtsenkrechten Neigung berührt, die anschließend in eine senkrechte Neigung übergeht.

16. Schalter mit zwei stabilen Stellungen nach einem der Ansprüche 1 bis 15, dadurch gekennzeichnet, daß er weiterhin eine elektrisch leitende Lamelle (710) aufweist, die von dem Steuerschieber (200) gehalten ist, und eine Feder (252), die zwischen die Lamelle (710) und den Schieber (200) derat eingespannt ist, daß, wenn der Schieber (200) in seine Arbeitsstellung verstellt wird, sie, die Lamelle (710), in Anlage an ein elektrisch leitendes Teil (714) mit einer konstanten Kraft drückt, die durch die Feder (252) bestimmt ist.

17. Schalter mit zwei stabilen Stellungen nach Anspruch 16, dadurch gekennzeichnet, daß die Lamelle (710) einen Rahmen aufweist, der aus zwei Stützen (720, 722) und zwei Traversen (724, 726) gebildet ist, wobei die Steuerschieber (200) einen Finger (250) aufweist, der auf der Innenfläche einer der Traversen (724) ruht und die Feder (252) zwischen den Finger (250) und die andere Traverse (726) eingespannt ist.

18. Schalter mit zwei stabilen Stellungen nach Anspruch 17, dadurch gekennzeichnet, daß eine der Stützen (720) eine Verlängerung aufweist, die auf einer festen Zunge (712) ruht, die mit dem Gehäuse integral ausgebildet ist, um einerseits einen permanenten elektrischen Kontakt zwischen der Lamelle (710) und der Zunge (712) zu bilden und andererseits eine Gelenkverbindung zwischen der Lamelle (710) und der Zunge (712) zu bilden.

19. Schalter mit zwei stabilen Stellungen nach einem der Ansprüche 17 oder 18, dadurch gekennzeichnet, daß eine der Traversen (726) ein elektrisch leitendes Teil (730) trägt.

20. Schalter mit zwei stabilen Stellungen nach Anspruch 18, dadurch gekennzeichnet, daß die Anlagezonen einerseits der Lamelle (710) an der Zunge (712) und andererseits der Lamelle (710) an den mit dem Schieber (200) verbundenen Fingern (250) jeweils beiderseits der Achse der zugehörigen Feder (252) angeordnet sind.

21. Schalter mit zwei stabilen Stellungen nach einem der Ansprüche 16 bis 20, dadurch gekennzeichnet, daß die Lamelle (710) dazu verwendet wird, bei Verstellung des Steuerschiebers (200) in seine Arbeitsstellung die Fernlichter einzuschalten.

22. Für die Steuerung der Scheinwerfer eines Kraftfahrzeuges nach einem der Ansprüche 1 bis 21, dadurch gekennzeichnet, daß das Gehäuse Laschen (180) enthält, die dazu eingerichtet sind, den Schieber (200) in einer vormontierten Stellung an dem Gehäuse festzuhalten.

23. Schalter mit zwei stabilen Stellungen nach einem der Ansprüche 1 bis 22, dadurch gekennzeichnet, daß er weiterhin ein Kugelgelenk (12) enthält, das an dem Gehäuse (100) um zwei zueinander orthogonalen Achsen (13, 15) drehbar montiert ist, wobei die Drehung des Kugelgelenks (12) um eine erste Achse (13) die Verschiebung des Steuerschiebers (200) zwischen der Ruhestellung und der Arbeitsstellung hervorruft, und weiterhin eine Haube (650) enthält, die mit dem Kugelgelenk (12) während ihrer Drehung um die zweite Achse (15) verbunden ist, um die Anzeiger für eine Fahrtrichtungsänderung des Fahrzeuges zu steuern, wobei die Rückführung der Haube in die Ruhelage durch einen Schwingarm (900) gesteuert ist, der verschwenkbar und verschiebbar auf einem Teil (950) geführt ist, das gegenüber dem Gehäuse (100) ausfedern kann, wobei das Gehäuse (100) und das Teil (950) jeweils ein Paar Vorsprünge (960, 962; 192, 194) in Form von Halbkegelstümpfen aufweisen, die paarweise angeordnet sind, um kegelstumpfförmige Halter zu bilden, an denen sich jeweils die Enden einer Feder (198) abstützen.

24. Schalter mit zwei stabilen Stellungen nach einem der Ansprüche 1 bis 23, dadurch gekennzeichnet, daß der Kontaktschieber (400) auf einer Rolle rollt, die von dem Gehäuse (100) gehälten wird.

25. Schalter mit zwei stabilen Stellungen nach einem der Ansprüche 1 bis 24, dadurch gekennzeichnet, daß der Kontaktschieber (400) zwischen zwei Stellungen verschoben werden kann, daß Einrichtungen (402) den Kontaktschieber in eine erste Stellung vorspannen und daß eine Verriegelungseinrichtung (455, 610, 600, 700) mit elektromagnetischer Steuerung vorgesehen ist, um den Kontaktschieber (400) selektiv in der zweiten Stellung zu halten, wenn er durch den dem Schieber (200) zugeordneten Anker (300) in diese gebracht ist.

26. Schalter mit zwei stabilen Stellungen nach Anpruch 25, dadurch gekennzeichnet, daß die Verriegelungseinrichtungen enthalten: einen elektrischen Schalter (700), der wahlweise von einem zugeordneten Hilfsschalter (600) mit Strom versorgt wird, und einen Schlitten (600), der ein Verriegelungsorgan trägt, und von dem Kontaktschieber (400) zwischen einer Ruhestellung entsprechend der ersten Stellung des Kontaktschiebers (400) und einer Verriegelungsstellung entsprechend der zweiten Stellung des Kontaktschiebers (400 verstellbar ist, und der in der Verriegelungsstellung gehalten wird, wenn die Spule (700) mit Strom versorgt ist.

27. Schalter mit zwei stabilen Stellungen nach Anspruch 26, dadurch gekennzeichnet, daß die Verriegelungseinrichtungen zwei Verriegelungsorgane enthalten, die von einem Ansatz (455), der sich senkrecht zur Verstellrichtung des Kontaktschiebers (400) erstreckt, und einem Fenster (610), das den Ansatz (455) aufnimmt, gebildet sind, wobei das Fenster wenigstens ein Verriegelungssegment (614) aufweist, das sich parallel zur Verstellrichtung des Schiebers erstreckt und eines der Verriegelungsorgane auf dem Kontaktschieber (400) vorgesehen ist, während das andere Verriegelungsorgan (610) auf dem Schlitten (600) vorgesehen ist.

28. Schalter mit zwei stabilen Stellungen nach Anspruch 27, dadurch gekennzeichnet, daß der Ansatz (455) mit dem Kontaktschieber (400) einstückig ausgebildet ist, während das Fenster (610) in dem Schlitten (600) ausgebildet ist.

29. Schalter mit zwei stabilen Stellungen nach einem der Ansprüche 25 bis 28 in Kombination mit Anspruch 26, dadurch gekennzeichnet, daß der Kontaktschieber (400) und der Schlitten (600) parallel zueinander verschiebbar geführt sind.

30. Schalter mit zwei stabilen Stellungen nach einem der Ansprüche 25 bis 29 in Kombination mit Anspruch 27, dadurch gekennzeichnet, daß das Fenster (610) einesteils ein Hauptsegment (612), das sich im wesentlichen in der Bewegungsrichtung des Kontaktschiebers (400) erstreckt, und andernteils das Verrieglungssegment (614) enthält, das sich senkrecht zur Verstellrichtung des Schiebers (600) erstreckt.

31. Schalter mit zwei stabilen Stellungen nach Anspruch 30, dadurch gekennzeichnet, daß das Verriegelungssegment (614) an einem Ende des Hauptsegments (612) angeordnet ist.

32. Schalter mit zwei stabilen Stellungen nach einem der Ansprüche 1 bis 31, dadurch gekennzeichnet, daß der Kontaktschieber (400) zwischen zwei Stellungen verstellbar ist, Einrichtungen (402) den Schieber (400) in eine erste Stellung elastisch vorspannen und Verriegelungseinrichtungen mit elektromagnetischer Steuerung (700, 600, 170, 171, 172) vorgesehen sind, um den Schieber (400) wahlweise in den zweiten Stellung zu halten, wenn er in diese durch den dem Schieber (200) zugeordneten Anker (300) gebracht ist, wobei die Verriegelungseinrichtungen enthalten: eine elektrische Spule (700), die wahlweise von einem zugeordneten Hilfsschalter mit Strom versorgt ist, einen Schlitten (600), der ein erstes Verriegelungsorgan (641) trägt, das mit einem zweiten Verriegelungsorgan (456), das auf dem Kontaktschieber (400) vorgesehen ist, zusammenwirkt, wobei der Schlitten durch den Schieber (400) parallel zur Verstellung desselben zwischen einer Ruhestellung entsprechend der ersten Stellung des Schiebers und einer Verriegelungsstellung entsprechend der zweiten Stellung des Schiebers verstellbar ist und in der Verriegelungsstellung gehalten wird, wenn die Spule (700) mit Strom versorgt ist, und eine Rampe, die eine Relativverstellung von Kontaktschieber (400) und Schlitten (600) senkrecht zur Verstellrichtung des Kontaktschiebers (400) steuert, wenn der Schieber aus der ersten Stellung in die zweite Stellung verstellt wird, um die Verriegelungsorgane (641, 456), die an dem Kontaktschieber (400) und dem Schlitten (600) vorgesehen sind, in Eingriff zu bringen.

33. Schalter mit zwei stabilen Stellungen nach Anspruch 32, dadurch gekennzeichnet, daß das an dem Schlitten (600) vorgesehene erste Verriegelungsorgan (641) und das an dem Kontaktschieber (400) vorgesehene zweite Verriegelungsorgan (456) Verriegelungsflächen aufweisen, die senkrecht zur Verschieberichtung des Schiebers (400) verlaufen.

34. Schalter mit zwei stabilen Stellungen nach einem der Ansprüche 32 oder 33, dadurch gekennzeichnet, daß die Rampe (171), die die Relativverstellung von Kontaktschieber (400) und Schlitten (600) steuert, an dem Gehäuse (100) ausgebildet ist.

35. Schalter mit zwei stabilen Stellungen nach Anspruch 34, dadurch gekennzeichnet, daß die Rampe (171) vom Rand einer Öffnung (121) gebildet ist, die in einer Zwischenwand (120) des Gehäuses ausgebildet ist.

36. Schalter mit zwei stabilen Stellungen nach Anspruch 35, dadurch gekennzeichnet, daß eine der Seiten der Öffnung (121), die in einem Steg (120) des Gehäuses ausgebildet ist, drei Segmente (170, 171, 172) aufweist: ein erstes Segment, das parallel zur Bewegungsrichtung des Kontaktschiebers (400) verläuft, ein zweites Segment (171), das die genannte Rampe bildet und gegenüber der Bewegungsrichtung des Kontaktschiebers geneigt ist, indem sie divergent gegenüber einer Wand (108) verläuft, die als Anschlag für den Kontaktschieber in Verlängerung des ersten Segments (170) verläuft, und ein drittes Segment (171), das parallel zur Bewegungsrichtung des Kontaktschiebers verläuft.

37. Schalter mit zwei stabilen Stellungen nach den Ansprüchen 33 und 36 in Kombination miteinander, dadurch gekennzeichnet, daß in Ruhestellung die Verriegelungsfläche (641), die an dem Schlitten (600) vorgesehen ist, mit der Überschneidung der ersten und zweiten Segmente (170, 171) des Randes der Öffnung (121), die in einem Steg (120) des Gehäuses ausgebildet ist, zusammenfällt.

38. Schalter mit zwei stabilen Stellungen nach Anspruch 37, dadurch gekennzeichnet, daß die Verriegelungsfläche (641), die an dem Schlitten (600) vorgesehen ist, in eine Fläche (643) mündet, die mit dem ersten Segment koplanal ist.

39. Schalter mit zwei stabilen Stellungen nach einem der Ansprüche 32 bis 38, dadurch gekennzeichnet, daß der Schlitten (600) einen Steuerfinger (640) aufweist, der als Anschlag für den kontakttragenden Schieber (400) dient, wenn dieser aus seiner Ruhestellung in die zweite Stellung verschoben wird.

40. Schalter mit zwei stabilen Stellungen nach einem der Ansprüche 26 bis 39, dadurch gekennzeichnet, daß der Schlitten (600) eine Lamelle (630) aus ferromagnetischem Material besitzt, die dazu eingerichtet ist, mit der Spule (700) zusammenwirken, um den Schlitten (600) in der Verriegelungsstellung zu halten, wenn die Spule (700) mit Strom versorgt ist.

41. Schalter mit zwei stabilen Stellungen nach Anspruch 40, dadurch gekennzeichnet, daß die Lamelle (630) mit Spiel von dem Schlitten (600) gehalten ist, um sich flach auf einen Kern (720) aufzulegen, der in die Spule (700), eingeführt ist.

42. Schalter mit zwei stabilen Stellungen nach einem der Ansprüche 40 und 41, dadurch gekennzeichnet, daß die Lamelle (630) U-förmig gebogen ist mit zwei im wesentlichen parallelen Schenkeln (632, 634), die durch eine Querbrücke (636) miteinander verbunden sind und schwenkbar durch die Brücke (636) an dem Schlitten (600) gelagert sind.

## Claims

1. A bistable switch, in particular a dipswitch for switching between a dipped and a main beam position for vehicle head lamps, the bistable switch comprising:
   a housing (100) containing:
   a control crosshead (200) guided in translation O) between a rest position and a working position;
   a toggle bar (300) extending in the direction of control crosshead displacement, and pivotally mounted on the control crosshead about an axis (302) extending transversely to the direction of crosshead translation;
   a contact carriage (400) capable of displacement in a direction (Q) generally perpendicular to the direciton (O) of crosshead displacement and to the pivot axis (302) of the toggle bar (300), said contact carriage including:
   at least one contact stud (450); characterized in that two sloping cam surfaces (460, 470) are provided on a common face of the contact carriage facing the toggle bar (300), said cam surfaces (460, 470) alternately occupying a position facing said toggle bar (300) depending on the position of the contact carriage in the housing.

2. A bistable switch according to Claim 1, wherein the contact carriage (400) is capable of being displaced between two positions and is resiliently urged towards a rest position.

3. A bistable switch according to one of Claims 1 and 2, wherein the contact carriage (400) has a peg (455) projecting therefrom perpendicularly to its direction of displacement (Q), said peg engaging a slot (144) provided in the housing or in a component fixed relative thereto, and said slot including at least one locking segment (150) extending parallel to the direction of crosshead displacement (O).

4. A bistable switch according to Claim 3, including an unlocking element suitable for covering said segment (150) of said slot (144) which extends parallel to the direction of crosshead displacement (O).

5. A bistable switch according to Claim 4, wherein said unlocking element is movable and wherein it may be controllably moved between a position in which it covers said segment (150) of said slot which extends parallel to the direction of crosshead displacement (O), and a position in which it does not cover said segment.

6. A bistable switch according to one of Claims 1 to 5, wherein the toggle bar (300) is resiliently urged towards a rest position in which the toggle bar (300) extends parallel to the direction of crosshead displacement (O).

7. A bistable switch according to one of Claims 1 to 6, wherein the control crosshead is resiliently urged towards a rest position at a distance from the contact carriage.

8. A bistable switch according to one of Claims 1 to 7, wherein the surface of the contact carriage (400) furthest from the control crosshead (200) includes two zones (414, 454) bearing against the housing (100) or against an item fixed relative thereto, one of said zones being constituted by a contact stud (450).

9. A bistable switch according to one of Claims 1 to 8, wherein the stroke of the contact carriage (400) and the positions of the cam slopes (460, 470) on the carriage are such that depending on the position of the carriage (400) in the housing, lines passing through the pivot axis (302) of the toggle bar (300) and the bottom of one or other of the camming slopes (460, 470) against which the tip (312) of the toggle bar comes into contact pass respectively on either side of a bearing point (414) between the contact carriage (400) and the housing (100) or an item fixed relative thereto, on that face (412) of the contact carriage (400) which is furthest from the control crosshead (200).

10. A bistable switch according to one of Claims 1 to 9, wherein a resilient member (424) urges the peg (455) towards the locking segment (150) of the slot provided in the housing.

11. A bistable switch according to Claim 10, wherein said resilient member also urges the contact stud (450) out from the contact carriage (400) into engagement with electrical contacts mounted on the housing.

12. A bistable switch according to one of Claims 1 to 11, wherein the contact carriage (400) is capable of moving between two positions, wherein means (402) resiliently urged the carriage (400) towards a first one of said positions, and wherein the housing (100) includes a guide structure (170) shpaed in such a manner that when the carriage (400) is displaced towards its first position, it encounters said guide structure (170) at a non-normal incidence.

13. A bistable switch according to Claim 12, wherein the guide structure (170) includes a generally cylindrical surface (172).

14. A bistable switch according to Claim 13, wherein the cylindrical surface (172) of the guide structure (170) is a cylinder of revolution about an axis extending transversely to the direction of contact carriage (400) displacement.

15. A bistable switch according to one of Claims 12 to 14, wherein the contact carriage, when moving towards its first position, initially contacts the guide structure (170) at a non-normal incidence which subsequently evolves towards a normal incidence.

16. A bistable switch according to one of Claims 1 to 15, further including an electrically-conductive blade (710) supported by the control crosshead (200) and a spring (252) inserted between the blade (710) and the crosshead (200), in such a manner that when the crosshead (200) is displaced towards its working position it presses said blade (710) against an electrically-conductive tab (714) with a constant force determined by said spring (252).

17. A bistable switch according to Claim 16, wherein the blade (710) comprises a frame constituted by two risers (720, 722) and by two cross-members (724, 726), the control crosshead (200) including a finger (250) which rests against the inside surface of one of the cross-members (724), and the spring (252) being inserted between the finger (250) and the other crossmember (726).

18. A bistable switch according to Claim 17, wherein one of the risers (720) includes a projection which rests against a blade (712) fixed to the housing, thereby defining a point of permanent electrical contact between the blade (710) moved by the control crosshead and the fixed blade (712), and simultaneously defining a hinge point for the blade (710) moved by the crosshead about said fixed blade (712).

19. A bistable switch according to one of Claims 17 or 18, wherein one of the cross-members (726) carries an electrically-conductive tab (730).

20. A bistable switch according to Claim 18, wherein the bearing zones between the blade (710) moved by the crosshead and the fixed blade (712), and between the blade (710) moved by the crosshead and the finger (250) on the crosshead (200), are disposed on opposite sides of the axis of the spring (252) associated therewith.

21. A bistable switch according to one of Claims 16 to 20, wherein the blade (710) moved by the control crosshead is used for flashing main beam headlamps when the crosshead (200) is moved toward its working position.

22. A bistable switch according to one of Claims 1 to 21 for controlling the lighting of a motor vehicle, wherein the housing includes tongues (180) suitable for holding the crosshead (200) in a preassembled position relative to the housing.

23. A bistable switch according to one of Claims 1 to 22, further including a ball (12) rotatably mounted relative to the housing (100) about first and second orthogonal axes (13, 15), rotation of the ball (12) about the first axis (13) causing the control crosshead (200) to be displaced between its rest position and its working position, a clevis (650) being linked to the ball (12) when it rotates about said second axis (15) in order to control vehicle direction indicator lights, said clevis returning to its rest position under the control of a rocker bar (900) guided to pivot and to translate relative to a part (950) capable of restricted movement relative to the housing (100), the housing (100) and said part (950) capable of restricted movement each including a pair of projections (960, 962; 192, 194) each in the form of one half of a truncated cone, said projections being brought together in pairs to constitute two supports in the form of truncated cones, and respective ends of a spring (198) being fitted over said supports.

24. A bistable switch according to one of Claims 1 to 23, wherein the contact carriage (400) runs on a wheel mounted on the housing (100).

25. A bistable switch according to one of Claims 1 to 24, wherein the contact carriage (400) is displaceable between two positions, wherein means (402) urge the carriage resiliently towards a first one of said positions, and wherein electromagnetically-controlled locking means (455, 610, 600, 700) are provided in order to selectively hold the carriage (400) in the second one of said positions when the carriage is displaced thereto by the toggle bar (300) associated with the control crosshead (200).

26. A bistable switch according to Claim 25, wherein the locking means comprise an electric coil (700) selectively powered via an auxiliary switch (800) associated with a slide (600) carrying a locking member and displaceable by the contact carriage (400) between a rest position corresponding to the first position of the carriage (400) and a locking position corresponding to the second position of the carriage (400), the slide (600) being maintained in the locking position when the coil (700) is powered.

27. A bistable switch according to Claim 26, wherein the locking means comprise a pair of locking members respectively constituted by a peg (455) extending perpendicularly to the direction of contact carriage (400) displacement and a slot (610) receiving said peg (455) the slot including at least one locking segment (614) extending parallel to the direction of crosshead displacememt, with one of the locking members being provided on the contact carriage (400) and with the other locking member (610) being provided on the slide (600).

28. A bistable switch according to Claim 27, wherein the peg (455) is fixed to the contact carriage (400) and the slot (610) is provided in the slide (600).

29. A bistable switch according to one of claims 25 to 28 taken into combination with Claim 26, wherein the contact carriage (400) and the slide (600) are guided in parallel translation.

30. A bistable switch according to one of Claims 25 to 29 taken into combination with Claim 27, wherein the slot (610) has a main segment (612) which extends generally in the direction of contact carriage (400) displacement and the locking segment (614) which extends perpendicularly to the direction of carriage displacement (600).

31. A bistable switch according to Claim 30, wherein the locking segment (614) is placed at one end of the main segment (612).

32. A bistable switch according to one of Claims 1 to 31, wherein the contact carriage (400) is displaceable between two positions, wherein means (402) urge the carriage (400) resiliently towards a first one of said positions, and wherein electromagnetically-controlled locking means (700, 600, 170, 171, 172) are provided to selectively hold the contact carriage (400) in a second one of said positions when the carriage is displaced into said second position by the toggle bar (300) associated with the crosshead (200), the locking means comprising an electric coil (700) selectively powered by an associated auxiliary switch, a slide (600) carrying a first locking member (641) co-operating with a second locking member (456) provided on the contact carriage (400), the slide being displaceable by the carriage (400) parallel to the displacement thereof between a rest position corresponding to the first position of the carriage and a locking position corrsponding to the second position of the carriage, the slide (600) being held in the locking position when the coil (700) is powered, and a slope (171) controlling relative displacement of the contact carriage (400) and the slide (600) perpendicularly to the direction of contact carriage (400) displacement when the contact carriage is displaced from the first position towards the second position in order to bring the locking members (641, 456) provided on the contact carriage (400) and the slide (600) into engagement.

33. A bistable switch according to Claim 32, wherein the first locking member (641) provided on the slide (600) and the second locking member (456) provided on the contact carriage (400) include locking surfaces orthogonal to the direction of carriage (400) displacement.

34. A bistable switch according to one of Claims 32 or 33, wherein the slope (171) controlling relative displacement of the contact carriage (400) and the slide (600) is provided on the housing (100).

35. A bistable switch according to Claim 34, wherein the slope (171) is formed by the edge of an opening (121) provided through a web (120) in the housing (100).

36. A bistable switch according to Claim 35, wherein one of the edges of the opening (121) through the web (120) in the housing comprises three segments (170, 171, 172): a first segment extending substantially parallel to the direction of contact carriage (400) displacement; a second segment (171) forming a slope and inclined relative to the direction of carriage displacement and sloping away from a cover plate (108) against which the carriage is in abutment as it goes away from said first segment (170); and a third segment (172) extending parallel to the direction of carriage displacement.

37. A bistable switch according to Claims 33 and 36 taken into combination, wherein the locking surface (641) provided on the slide (600) coincides, in the rest position, which the intersection of the first and second segments (170, 171) in the edge of the opening (121) provided through the web (120) in the housing.

38. A bistable switch according to Claim 37, wherein the locking surface (641) provided on the slide (600) runs into a surface (643) which is coplanar with the first segment.

39. A bistable switch according to one of Claims 32 to 38, wherein the slide (600) includes a control finger (640) serving as an abutment for the contact carriage (400) when the carriage is displaced from its rest position towards its second position.

40. A bistable switch according to one of Claims 26 to 39, wherein the slide (600) has a blade (630) of ferromagnetic material suitable for co-operating with the coil (700) in order to hold the slide (600) in the locking position while the coil (700) is powered.

41. A bistale switch according to Claim 40, wherein the blade (630) is loosely supported on the slide (600) so as to be able to press closely against a core (702) provided in the coil (700).

42. A bistable switch according to one of Claims 40 and 41, wherein the blade (630) is U-shaped having two generally parallel branches (632, 634) interconnected by a transverse link (636) and pivotally mounted on the slide (600) by means of said link (636).

FIG_1

EP 0 243 252 B1

EP 0 243 252 B1

FIG.2

FIG.3

EP 0 243 252 B1

FIG.4

FIG.5

FIG.6

FIG.7

FIG.8

FIG-9

FIG-10

FIG-11

FIG-12

FIG-13

FIG-14

FIG-15

FIG-16

FIG_17

EP 0 243 252 B1

FIG_18

FIG. 19

FIG_20

FIG_21

650

692   690   652

FIG. 22

O

P

650

652   654   666

670   662

664

680

657

659   658   656   668

FIG. 23

P

Q

FIG. 24

EP 0 243 252 B1

FIG. 25

FIG. 26

FIG. 27

FIG. 28

FIG. 29

P

Q

FIG. 30

662

654

656

664

650

- 652 -

692  690

694

696

FIG. 31

952

Q

960

962

P

956  954  958

950

## FIG_32

## FIG_33

## FIG_34

FIG_35

FIG_36

FIG_37